(19) Europäisches Patentamt / European Patent Office / Office européen des brevets

(11) **EP 3 150 884 A1**

(12) **EUROPEAN PATENT APPLICATION**
published in accordance with Art. 153(4) EPC

(43) Date of publication:
**05.04.2017 Bulletin 2017/14**

(51) Int Cl.:
**F16H 9/24** *(2006.01)*

(21) Application number: **15800071.1**

(22) Date of filing: **26.02.2015**

(86) International application number:
**PCT/JP2015/055519**

(87) International publication number:
**WO 2015/182193 (03.12.2015 Gazette 2015/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.05.2014 JP 2014109517**

(71) Applicant: **Jatco Ltd
Fuji-shi, Shizuoka 417-8585 (JP)**

(72) Inventor: **TANGE, Hiroshi
Fuji-shi
Shizuoka 417-8585 (JP)**

(74) Representative: **Grünecker Patent- und
Rechtsanwälte
PartG mbB
Leopoldstraße 4
80802 München (DE)**

(54) **TRANSMISSION MECHANISM**

(57) Transmission mechanism has interlock mechanism (60) interlocking widening of circumcircle radius of one composite sprocket (5) and reduction of circumcircle radius of the other composite sprocket (5) during transmission ratio change. Interlock mechanism (60) is configured so that in a case where transmission ratio is changed toward uniform transmission ratio at which rotation speeds of two rotation shafts (1, 1) are the same, if actual chain length, which is real length of chain with respect to geometrical chain length that is length of ideal chain wound around two composite sprockets (5, 5) without excess and deficiency of chain length when widening and reduction are carried out by a same amount, is greater than predetermined length, reduction amount is set to be smaller than widening amount, while if the actual chain length is not greater than the predetermined length, the widening and reduction amounts are set to be the same.

**FIG. 2**

**Description**

The present invention relates to a transmission mechanism that transmits power by a plurality of pinion sprockets, each of which is supported movably in a radial direction with equidistance of each pinion sprocket from a rotation shaft maintained and each of which revolves about an axis of the rotation shaft (so as to rotate integrally with the rotation shaft), and a chain wound around the pinion sprockets.

Background Art

In recent years, as a transmission for a vehicle, a belt type continuously variable transmission, in which a drive belt is wound around a primary pulley and a secondary pulley and power is transmitted using a frictional force generated between each pulley and the drive belt by thrust applied to a movable sheave of each pulley, has been put to practical use. In a case of the continuously variable transmission, it is required to secure the frictional force by increasing the thrust when transmitting great power. At this time, load of a driving source (an engine or an electric motor) for driving an oil pump that generates a hydraulic pressure for the thrust is increased, then this leads to increase in a fuel consumption amount or a power consumption amount. Further, there is friction loss in a part where slip mechanically occurs between the pulley and the drive belt.

Therefore, there has been developed a continuously variable transmission mechanism that transmits power by a plurality of pinion sprockets and a chain wound around the pinion sprockets without using the thrust and the frictional force. Such a continuously variable transmission mechanism is provided, at an input side and an output side thereof, with an apparent large sprocket (here, called a composite sprocket) formed by the plurality of pinion sprockets, each of which is supported movably in a radial direction with equidistance of each pinion sprocket from an axis of a rotation shaft maintained and each of which revolves about the axis of the rotation shaft so as to rotate integrally with each other and integrally with the rotation shaft and also each of which is arranged at an apex of a polygon. Then, by the chain wound around these composite sprockets, the power is transmitted.

In such a continuously variable transmission mechanism, the pinion sprockets radially move in synchronization with each other while maintaining their equidistance from the rotation shaft, thereby changing a size of the polygon as a similar shape, then the composite sprocket (an outside diameter of the composite sprocket) is widened or reduced. The outside diameter of the input side composite sprocket is widened or reduced and the outside diameter of the output side composite sprocket is reduced or widened, thereby changing a transmission ratio. Such a continuously variable transmission mechanism has been disclosed in, for instance, Patent Document 1 and Patent Document 2.

Here, in order to suppress slack and tension of the chain which occurs due to the transmission ratio change (or speed change) in such continuously variable transmission mechanisms disclosed in Patent Document 1 and Patent Document 2, it is conceivable that the widening or reduction of the outside diameter of the one composite sprocket and the reduction or widening of the outside diameter of the other composite sprocket will be carried out by the same amount. However, if an amount of the widening or reduction of the outside diameter of the one composite sprocket and an amount of the reduction or widening of the outside diameter of the other composite sprocket are the same, due to the transmission ratio change (or the speed change), a geometrical chain length changes. The "geometrical chain length" called here is a geometrical circumference when the chain is wound around the input and output side composite sprockets without excess and deficiency of a chain length. In other words, the geometrical chain length is a theoretical chain length (a calculative chain length) without slack and tension of the chain.

More specifically, when the transmission ratio of the continuously variable transmission mechanism is a uniform transmission ratio (a rotation speed ratio between the input side composite sprocket and the output side composite sprocket is 1:1), the geometrical chain length is the shortest. On the other hand, when the transmission ratio of the continuously variable transmission mechanism is a Lowest or a Highest, the geometrical chain length is the longest. Because of this, in a case where a real chain length (called an "actual chain length") is set to a chain length that is equal to the geometrical chain length of the uniform transmission ratio of the continuously variable transmission mechanism, when intending to change the transmission ratio from this state, since the chain is stretched tight or is under tension, it is impossible to change the transmission ratio to a Low side or a High side. Therefore, it is conceivable that the actual chain length will be set to a chain length that is equal to a geometrical chain length when the transmission ratio is the Lowest or the Highest. In this case, however, when the widening or reduction of the outside diameter of the one composite sprocket and the reduction or widening of the outside diameter of the other composite sprocket are carried out by the same amount upon change of the transmission ratio (upon speed change), due to change of the geometrical chain length during the speed change, the chain goes slack. As a consequence, vibrations and noises might become greater and grow louder, and further there is a risk that the chain will go slack and drop off.

The present invention was made in view of the above technical problem. An object of the present invention is therefore to provide a transmission mechanism that is capable of suppressing the slack of the chain. However, the present invention can achieve not only this object, but also other objects that can be obtained by workings and effects of after-described embodiment which cannot be obtained by related arts.

Citation List

Patent Document

Patent Document 1 : US Patent No. 7713154
Patent Document 2 : Japanese Unexamined Patent Application Publication No. 2002-250420

**Summary of the Invention**

(1) In order to achieve the above object, a transmission mechanism that changes a transmission ratio of the present invention, comprises: a set of two composite sprockets each having: a rotation shaft that inputs or outputs power; a plurality of pinion sprockets, each of which is supported movably in a radial direction with respect to the rotation shaft; and a sprocket movement mechanism that moves the plurality of pinion sprockets in the radial direction in synchronization with each other while maintaining equidistance of each of the pinion sprockets from a shaft center of the rotation shaft; a chain wound around the set of two composite sprockets, the transmission ratio being changed by changing a circumcircle radius that is a radius of a circle that encircles all of the plurality of pinion sprockets and circumscribes all of the plurality of pinion sprockets; and an interlock mechanism that can interlock widening of the circumcircle radius of one composite sprocket and reduction of the circumcircle radius of the other composite sprocket during change of the transmission ratio. And, the interlock mechanism is configured so that in a case where the transmission ratio is changed toward a uniform transmission ratio at which rotation speeds of the two rotation shafts are the same, if an actual chain length, which is a real length of the chain with respect to a geometrical chain length that is a length of an ideal chain wound around the two composite sprockets without excess and deficiency of a chain length when the widening of the one composite sprocket and the reduction of the other composite sprocket are carried out by a same amount, is greater than a predetermined length, an amount of the reduction of the other composite sprocket is set to be smaller than an amount of the widening of the one composite sprocket, while if the actual chain length is not greater than the predetermined length, the amount of the widening of the one composite sprocket and the amount of the reduction of the other composite sprocket are set to be the same.
(2) It is desirable that the actual chain length should be set to be greater than a maximum possible geometrical chain length.
(3) It is desirable that the actual chain length should be set to a length including a stretch of the chain.
(4) It is desirable that the widening or the reduction of the composite sprocket should be carried out so that the number of teeth of an apparent composite sprocket formed by the plurality of pinion sprockets is shifted from a current integer to other integers in sequence.
(5) Further, it is desirable that in the case where the transmission ratio is changed toward the uniform transmission ratio, if the geometrical chain length is the predetermined length or more greater than the actual chain length, the interlock mechanism should stop the reduction of the other composite sprocket.
(6) Moreover, it is desirable that the transmission mechanism should further comprises a map in which a combination between the number of teeth of the one composite sprocket and the number of teeth of the other composite sprocket is previously set so as to stop the reduction of the other composite sprocket when the geometrical chain length is the predetermined length or more greater than the actual chain length in the case where the transmission ratio is changed toward the uniform transmission ratio, and on the basis of the map, the interlock mechanism should widen the circumcircle radius of the one composite sprocket and should reduce the circumcircle radius of the other composite sprocket.
(7) Furthermore, it is desirable that the interlock mechanism has: a stationary disk having sprocket stationary radial slots in which supporting shafts of the plurality of pinion sprockets are inserted and rotating integrally with the rotation shaft; and a movable disk having sprocket movable radial slots, arranged concentrically with the stationary disk and rotating relatively to the stationary disk, wherein the supporting shafts of the plurality of pinion sprockets are positioned in intersection positions where the sprocket movable radial slots and the sprocket stationary radial slots intersect with each other. And, it is desirable that the sprocket stationary radial slots and the sprocket movable radial slots should be formed into respective shapes by which in the case where the transmission ratio is changed toward the uniform transmission ratio, if the actual chain length with respect to the geometrical chain length is equal to or greater than the predetermined length, the amount of the reduction of the other composite sprocket is set to be smaller than the amount of the widening of the one composite sprocket, while if the actual chain length with respect to the geometrical chain length is not equal to or greater than the predetermined length, the amount of the widening of the one composite sprocket and the amount of the reduction of the other composite sprocket are set to be the same.

According to the present invention, in a case where the transmission ratio is changed toward the uniform transmission ratio, if the actual chain length with respect to the geometrical chain length, i.e. a difference between the actual chain length and the geometrical chain length, is greater than a predetermined length, the amount of the reduction of the other composite sprocket is set to be smaller than the amount of the widening of the one composite sprocket. Therefore, an increase of the difference between the actual chain length and the geometrical chain length can be suppressed, and the slack of the chain can be suppressed.

Brief Description of Drawings

[Fig. 1]

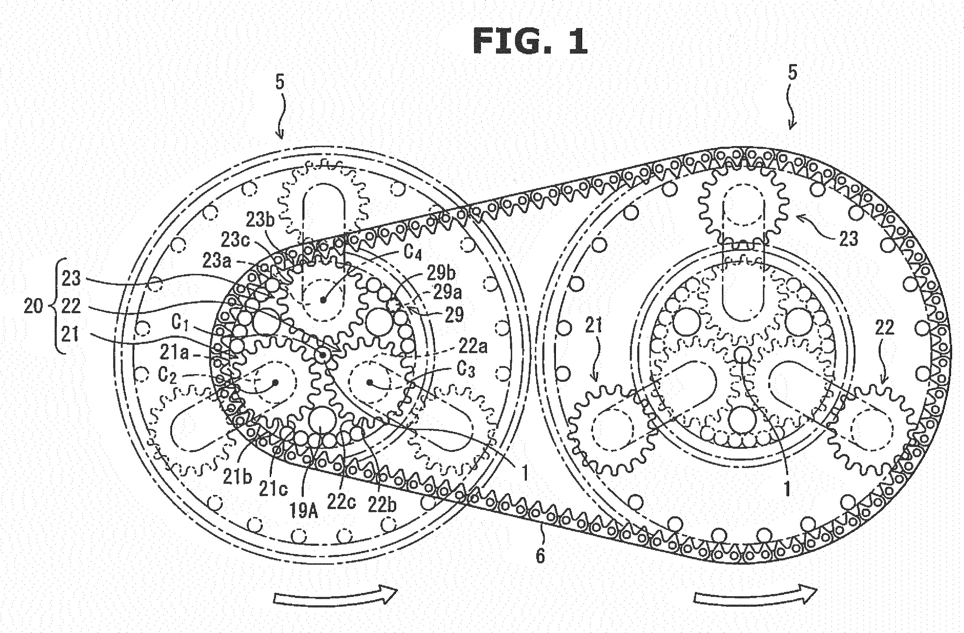

Fig. 1 is a sectional view cut in a radial direction (a cross section) schematically showing composite sprockets and a chain of a transmission mechanism according to an embodiment of the present invention.
[Fig. 2]

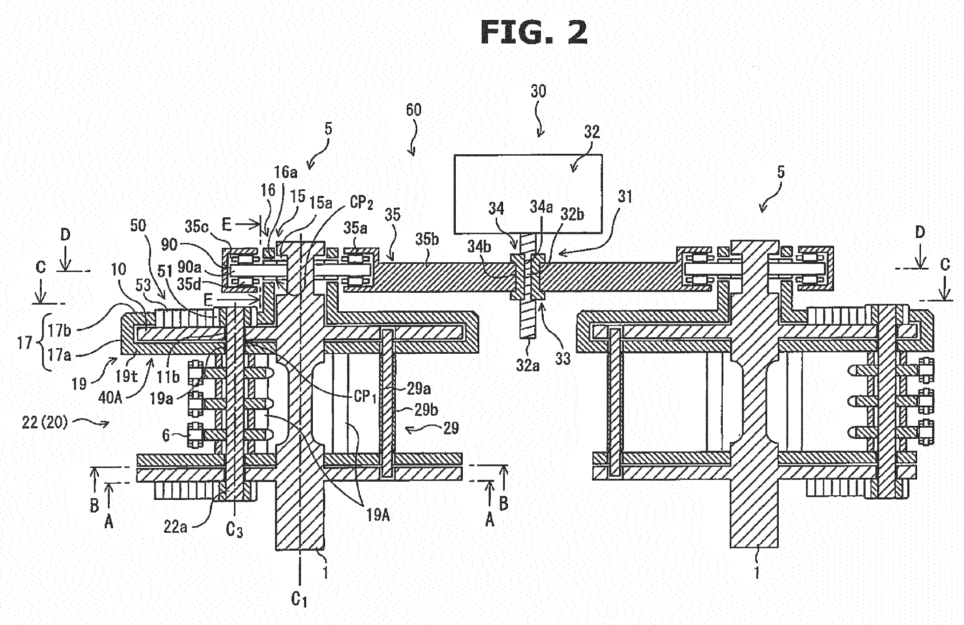

Fig. 2 is a sectional view cut in an axial direction (a longitudinal cross section) schematically showing the composite sprockets and the chain of the transmission mechanism according to the embodiment of the present invention.
[Fig. 3]

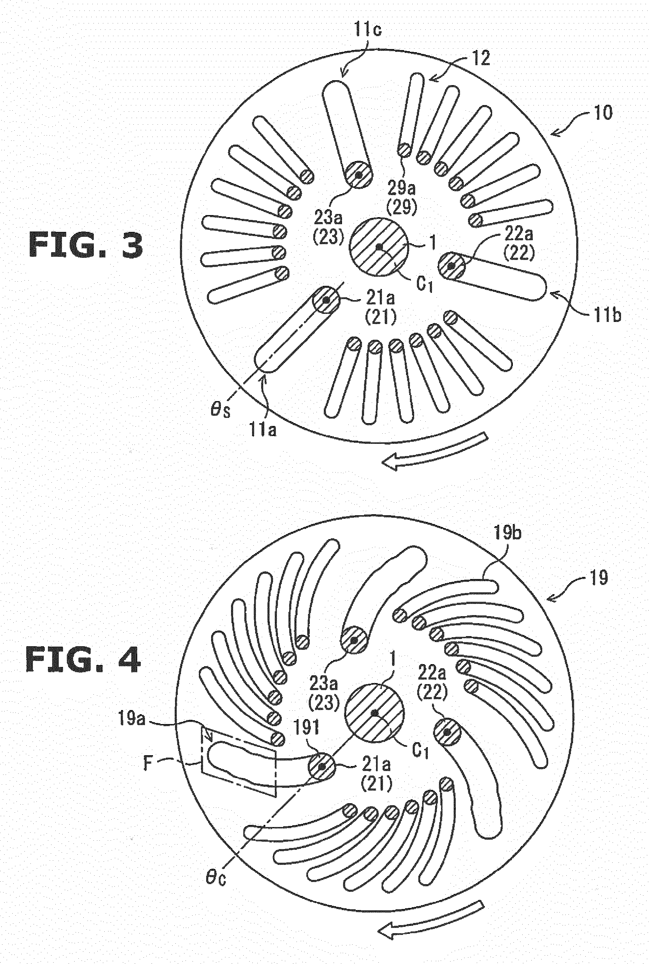

Fig. 3 is a side view of a stationary disk of the transmission mechanism according to the embodiment of the present invention, viewed from arrows A-A of Fig. 2.
[Fig. 4]
Fig. 4 is a side view of a movable disk of the transmission mechanism according to the embodiment of the present invention, viewed from arrows B-B of Fig. 2.
[Figs. 5A to 5C]

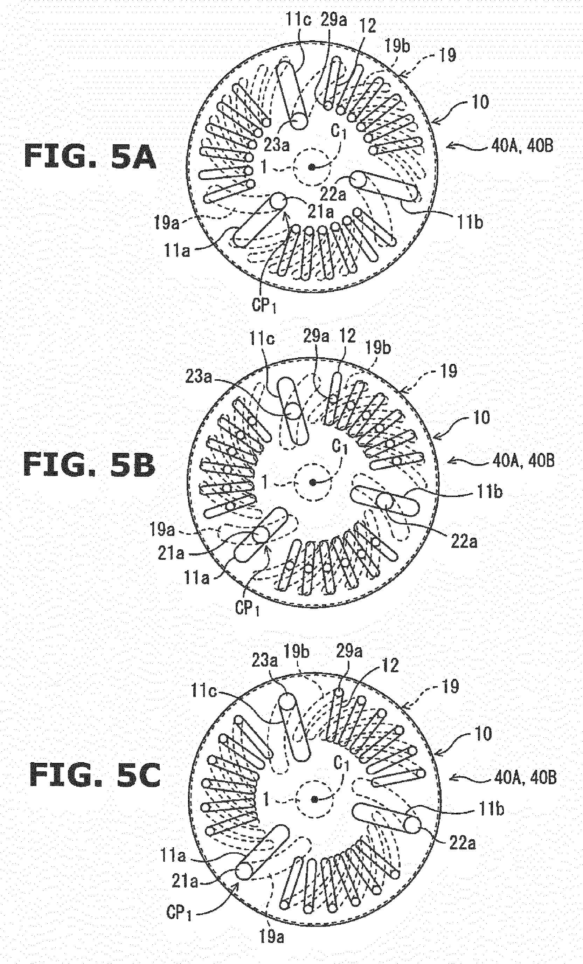

Figs. 5A to 5C are drawings showing the stationary and movable disks for moving pinion sprockets in a radial direction and showing each supporting shaft (axis or rod) of the pinion sprockets and guide rods which are moved by the stationary and movable disks in the transmission mechanism according to the embodiment. Figs. 5A to 5C explain a sprocket movement mechanism and a rod movement mechanism. A circumcircle radius becomes greater in order of Fig. 5A, Fig. 5B and Fig. 5C. Fig. 5A shows a case where the circumcircle radius is a minimum diameter. Fig. 5C shows a case where the circumcircle radius is a maximum diameter.
[Fig. 6]

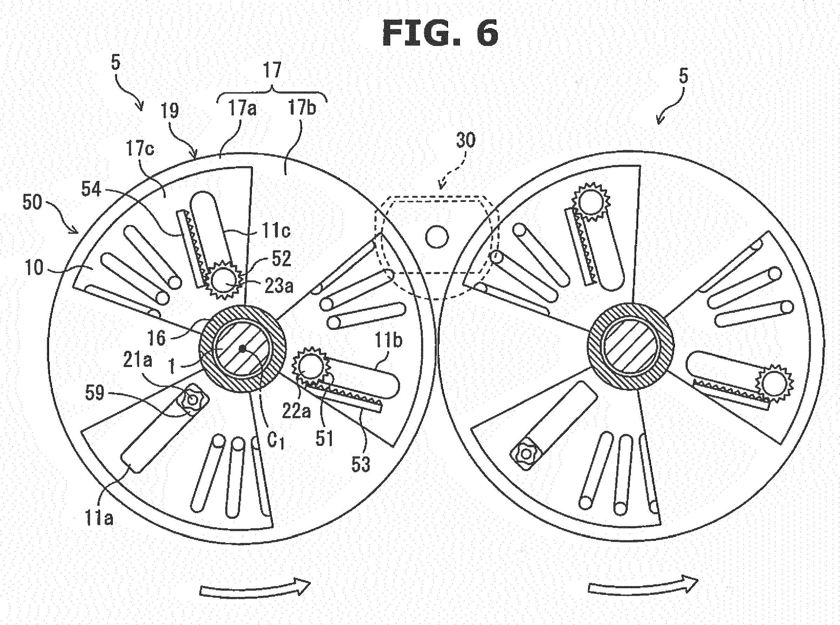

Fig. 6 is a sectional view cut in the radial direction of the transmission mechanism according to the embodiment of the present invention, viewed from arrows C-C of Fig. 2.
[Fig. 7]

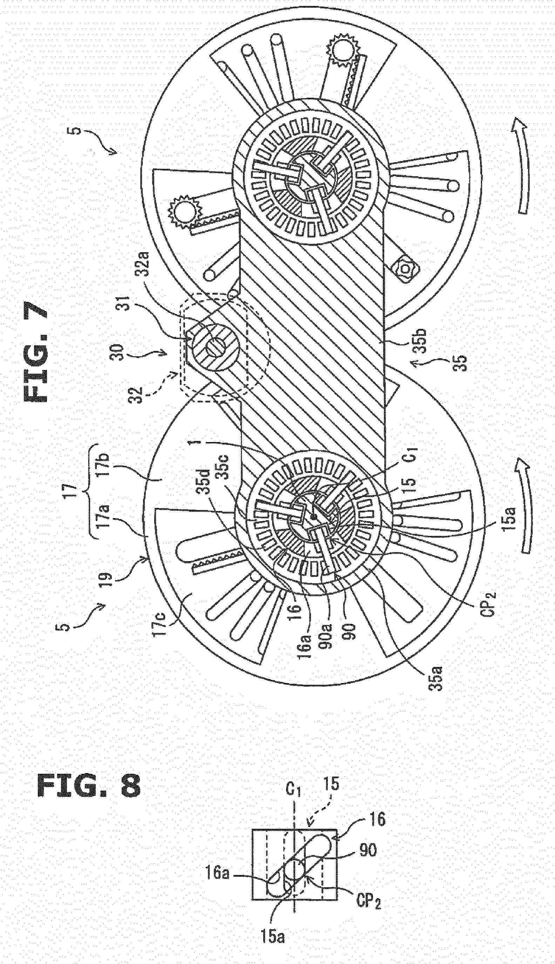

Fig. 7 is a sectional view cut in the radial direction of the transmission mechanism according to the embodiment of the present invention, viewed from arrows D-D of Fig. 2.
[Fig. 8]
Fig. 8 is an enlarged view of main parts of a first cam groove and a second cam groove of the transmission mechanism according to the embodiment of the present invention, viewed from arrows E-E of Fig. 2.
[Fig. 9]

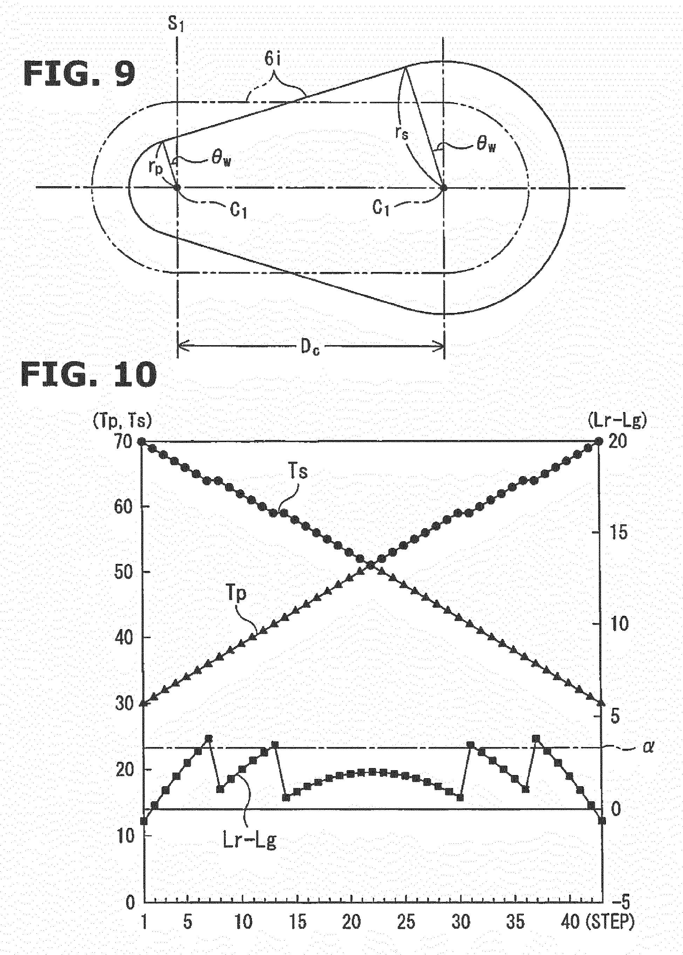

Fig. 9 is a schematic diagram for explaining a geometrical chain length of the transmission mechanism according to the embodiment of the present invention.
[Fig. 10]
Fig. 10 is a graph showing the number of teeth of the composite sprocket and slack of the chain, of the transmission mechanism according to the embodiment of the present invention.
[Fig. 11]

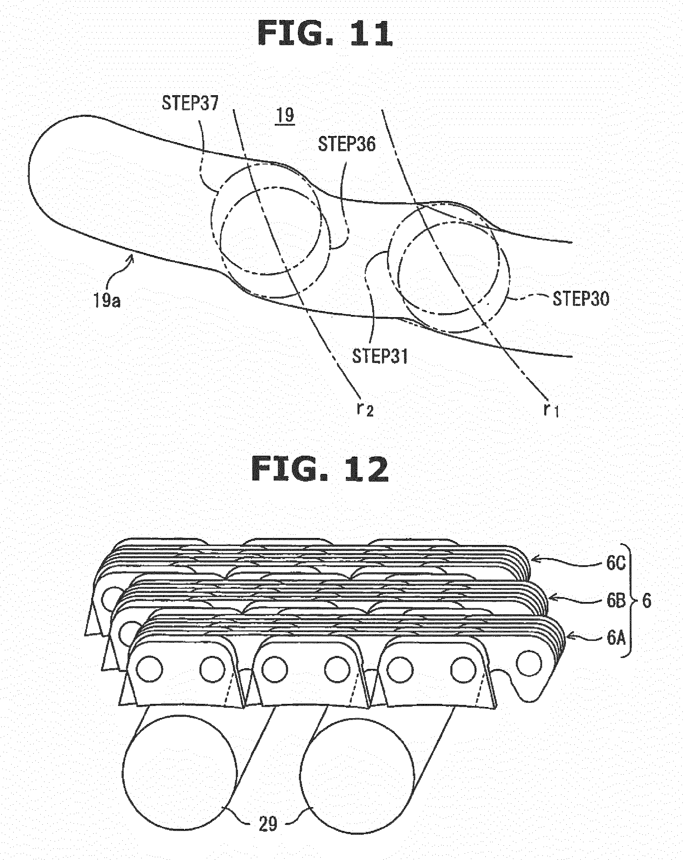

Fig. 11 is an enlarged view of an area F of Fig. 4.
[Fig. 12]
Fig. 12 is a perspective view schematically showing a part of the chain and a part of the guide rod that guides the chain.

Embodiments for carrying out the Invention

In the following description, an embodiment of a transmission mechanism of the present invention will be explained with reference to the drawings. The transmission mechanism of the embodiment is favorable for a transmission for a vehicle. Here, the embodiment will be explained with a side that is close to a shaft center (an axis) of a rotation shaft (a rotation axis) of the transmission mechanism being an inner side, and with an opposite side being an outer side.

In the present embodiment, when holding a transmission ratio constant in the transmission mechanism, a state in which the number of teeth of a composite sprocket is an integer is held. When changing the transmission ratio, the number of teeth of the composite sprocket is shifted from a current integer to other integers in sequence. These will be explained in the present embodiment. The transmission mechanism of the present invention can achieve a multi-range transmission by and according to a number of the integer chosen as the number of teeth of the composite sprocket. Here, the number of teeth of the composite sprocket can be obtained by dividing a circumference of a pitch circle of the composite sprocket by a unit link length of the chain (a unit pitch length of a pinion sprocket). The number of teeth of the composite sprocket means the apparent number of teeth of the composite sprocket (when considering that the teeth are present throughout an entire circumference of an apparent large sprocket formed by a plurality of pinion sprockets) . In the following description, the number of teeth of the composite sprocket is used as the above meaning.

[Embodiment]

In the following description, a transmission mechanism of an embodiment will be explained.

[1. Configuration]

As shown in Fig. 1, the transmission mechanism has a set of two composite sprockets 5, 5 and a chain 6 wound around these composite sprockets 5, 5. The composite sprocket 5 means an apparent large sprocket formed by a plurality of pinion sprockets 20 and a plurality of guide rods 29 (both described in detail later), each of which is arranged at an apex of a polygon (here, an icosihenagon).

One of the set of two composite sprockets 5, 5 is a composite sprocket 5 (shown on a left side in Fig. 1) rotating concentrically and integrally with an input side rotation shaft 1 (an input shaft or an input axis), and the other is a composite sprocket 5 (shown on a right side in Fig. 1) rotating concentrically and integrally with an output side rotation shaft 1 (an output shaft or an output axis). Since these composite sprockets 5, 5 have the same configuration, the input side composite sprocket 5 is focused here, and its configuration will be explained in the following description.

The composite sprocket 5 has the rotation shaft (the rotation axis) 1, the plurality of pinion sprockets (here, three pinion sprockets) 20, each of which is supported movably in a radial direction with respect to the rotation shaft 1, and the plurality of guide rods (here, eighteen guide rods) 29. The three pinion sprockets 20 are arranged at regular intervals along a circumferential direction on a circumference of a circle whose center is a shaft center $C_1$ of the rotation shaft 1. Between adjacent pinion sprockets 20, six guide rods 29 are disposed.

This transmission mechanism is a mechanism that changes a transmission ratio by changing (widening or reducing) an outside diameter of the apparent large sprocket formed by the pinion sprockets 20 and the guide rods 29, each of which is arranged at the apex of the polygon, i.e. an outside diameter of the composite sprocket 5.

The outside diameter of the composite sprocket 5 corresponds to a radius (hereinafter, called "circumcircle radius") of a circle (a circumcircle) that encircles all of the plurality of pinion sprockets 20 and circumscribes all of the plurality of pinion sprockets 20. Or, since the chain 6 is wound around the composite sprocket 5, the outside diameter of the composite sprocket 5 also corresponds to a contact radius of the plurality of pinion sprockets 20 and the chain 6, namely that the outside diameter of the composite sprocket 5 corresponds to a radius of a pitch circle of the composite sprocket 5. Here, Fig. 1 shows a case where the circumcircle radius on the input side is the minimum diameter, and the circumcircle radius on the output side is the maximum diameter.

In this manner, the transmission mechanism changes the transmission ratio by change of the circumcircle radius. For instance, if the circumcircle radii of the composite sprockets 5, 5 are the same, the transmission ratio of the transmission mechanism is a uniform transmission ratio (a rotation speed ratio between the one composite sprocket 5 and the other composite sprocket 5 is 1:1) . When the transmission ratio is the uniform transmission ratio, rotation speeds of the two rotation shafts 1, 1 are the same.

The composite sprocket 5 has a sprocket movement mechanism 40A that moves the plurality of pinion sprockets 20, a mechanical rotation drive mechanism 50 that drives rotation of rotation pinion sprockets 22, 23 included in the pinion sprockets 20 in concert with the sprocket movement mechanism 40A, a rod movement mechanism 40B that moves the plurality of guide rods 29, and an interlock mechanism (an interlock unit) 60 that can connect or interlock the widening of the circumcircle radius of the one composite sprocket 5 and the reduction of the circumcircle radius of the other composite sprocket 5 (see Figs. 2, 5 to 7), although these mechanisms are not shown in Fig. 1. Detailed explanation of these mechanisms will be described later. In the following description, the configuration of the transmission mechanism will be explained in order of the composite sprocket 5 and the chain 6 wound around the composite sprocket 5.

[1-1. Composite sprocket]

In the following explanation of configuration of the composite sprocket 5, a basic configuration or structure will be explained, then a configuration or structure which is characteristic of the present invention will be explained. The basic configuration will be explained in order of the pinion sprocket 20 engaging with the chain 6, the guide rod 29 guiding the chain 6, a stationary disk 10 (a radial direction movement stationary disk, a rotation stationary disk) rotating integrally with the rotation shaft 1, a movable disk 19 arranged concentrically with the stationary disk 10 and rotating relatively to the stationary disk 10, a first rotation portion 15 rotating integrally with the stationary disk 10, a second rotation portion 16 rotating integrally with the movable disk 19 and a relative rotation drive mechanism 30 driving the relative rotation of the movable disk 19 with respect to the stationary disk 10.

The stationary disk 10, the movable disk 19, the first rotation portion 15 and the second rotation portion 16 are arranged concentrically with the shaft center C1 of the rotation shaft 1. A radial direction of each of the disks 10 and 19 is identical with a radial direction of the rotation shaft 1. After explanation of the above basic configuration, the configuration or structure which is characteristic of the present invention will be explained in order of the sprocket movement mechanism 40A, the rod movement mechanism 40B, the mechanical rotation drive mechanism 50 and the interlock mechanism 60.

[1-1-1. Pinion sprocket]

The three pinion sprockets 20 are configured as a gear or toothed wheel that transmits power by engaging with the chain 6, and revolve about the shaft center C1 of the rotation shaft 1. Here, "revolve (revolution) " means that eachpinion sprocket 20 revolves with the shaft center C1 of the rotation shaft 1 being a center. When the rotation shaft 1 rotates, each pinion sprocket 20 revolves in concert with this rotation of the rotation shaft 1. That is, the number of rotation (a rotation speed) of the rotation shaft 1 and the number of revolution (a revolution speed) of the pinion sprocket 20 are equal to each other. Here, in Fig. 1, a revolution direction of a counterclockwise direction is shown by an open arrow.

The pinion sprockets 20 are formed from one pinion sprocket (hereinafter, called a stationary pinion sprocket) 21 that does not rotate on its axis and the two rotation pinion sprockets 22 and 23 that are arranged at an advanced side and a retarded side with respect to the stationary pinion sprocket 21 in a direction of a rotation phase of the revolution and can rotate on their axes. In the following explanation, to make a distinction, a pinion sprocket (an advanced side rotation pinion sprocket) arranged at the advanced side with respect to the stationary pinion sprocket 21 is called a first rotation pinion sprocket 22, and a pinion sprocket (a retarded side rotation pinion sprocket) arranged at the retarded side with respect to the stationary pinion sprocket 21 is called a second rotation pinion sprocket 23.

The pinion sprockets 21, 22 and 23 are respectively connected to supporting shafts (pinion sprocket shafts) 21a, 22a and 23a that are provided at centers of the pinion sprockets 21, 22 and 23. "Rotate (rotation)" here means that the rotation pinion sprockets 22 and 23 rotate on shaft centers C3 and C4 of their supporting shafts 22a and 23a. Here, shaft centers C2, C3 and C4 of the supporting shafts 21a, 22a and 23a and the shaft center C1 of the rotation shaft 1 are parallel to each other.

The stationary pinion sprocket 21 has a body 21b and teeth 21c formed throughout an entire circumference of an outer circumferential portion of the body 21b. Likewise, the rotation pinion sprockets 22 and 23 have a body 22b, a body 23b and protruding teeth 22c, protruding teeth 23c formed throughout entire circumferences of outer circumferential portions of the bodies 22b and 23b respectively. As a matter of course, a shape, a size and a pitch of the toothprovided at each of the pinion sprockets 21, 22 and 23 are the same standardized shape, size and pitch.

The first rotation pinion sprocket 22 rotates on its axis in a clockwise direction when the circumcircle radius is widened in Fig. 1, while the first rotation pinion sprocket 22 rotates on its axis in a counterclockwise direction when the circumcircle radius is reduced, although a detailed explanation will be made later. On the other hand, the second rotation pinion sprocket 23 rotates on its axis in the counterclockwise direction when the circumcircle radius is widened in Fig. 1, while the second rotation pinion sprocket 23 rotates on its axis in the clockwise direction when the circumcircle radius is reduced. Since the first rotation pinion sprocket 22 and the second rotation pinion sprocket 23 have the same structure or configuration except for differences in an arranged position and a rotation direction, the first rotation pinion sprocket 22 is focused here, and its configuration will be explained in the following description.

In the present embodiment, as shown in Fig. 2, the first rotation pinion sprocket 22 has three row gears in an axial direction. The stationary pinion sprocket 21 and the second rotation pinion sprocket 23 also have three row gears in their axial directions, although these are not shown in the drawings. Three chains 6 are wound around the pinion sprockets 21, 22 and 23 with one chain 6 engaging with the gear in each row. Each of the pinion sprockets 21, 22 and 23 has the three row gears in the axial direction as explained above, and the three row gears of each of the pinion sprockets 20 are provided with spaces given through spacers.

The number of rows of the gear of the pinion sprockets 21, 22 and 23 could be two or four or more, or might be one, according to magnitude of transmission torque of the transmission mechanism. In Fig. 2, for easy understanding, the configuration is schematically shown, and the first rotation pinion sprocket 22 and after-mentioned relative rotation drive mechanism 30 are shown on a same cross section with a space provided between the input side composite sprocket 5 and the output side composite sprocket 5.

Here, each of the pinion sprockets 21, 22 and 23 could be provided with a phase shift (out-of-phase) allowable power transmission mechanism that permits or allows a slight rotation of each of the pinion sprockets 21, 22 and 23 (a rotation within a certain range) while restraining a rotation of each of the pinion sprockets 21, 22 and 23 on the respective supporting shafts 21a, 22a and 23a and achieves power transmission, although each mechanism is not shown in the drawings. The phase shift allowable power transmission mechanism has a key member fixed to an inner circumferential side of each of the pinion sprockets 21, 22 and 23 so as to rotate integrally with the pinion sprockets 21, 22 and 23, a key groove formed at an outer circumferential side of each of the supporting shafts 21a, 22a and 23a of the pinion sprockets 21, 22 and 23 and receiving or accommodating (or engaging with) the key member with play in a rotation direction and a biasing member biasing or forcing the key member from both of forward and reverse directions so that the key member is positioned in a neutral position in the rotation direction of the key groove. The phase shift allowable power transmission mechanism is a mechanism that, as mentioned above, biases or forces the key member to the neutral position in the rotation direction and elastically restrains the rotation of each of the pinion sprockets 21, 22 and 23. In this case, the bodies 21b, 22b and 23b of the pinion sprockets 21, 22 and 23 transmit the power with their slight rotations allowed with respect to the supporting shafts 21a, 22a and 23a.

[1-1-2. Guide rod]

As shown in Fig. 1, the plurality of guide rods 29 are elements that guide the chain 6 so as to make variation in a distance between the chain 6 and the shaft center C1 of the rotation shaft 1 smaller, i.e. so as to bring an orbit or a path of the chain 6 around the rotation shaft 1 closer to as circular a path as possible. These guide rods 29 guide the path of the chain 6 that abuts on an outer side circumferential surface in a radial direction of the guide rod 29. Since the pinion sprockets 21, 22 and 23 and each guide rod 29 form a shape of the polygon (a substantially regular polygon), the chain 6 rolls along the shape of the polygon while abutting on or contacting the pinion sprockets 21, 22 and 23 and each guide rod 29 and being guided by the pinion sprockets 21, 22 and 23 and each guide rod 29, each of which is located radially inside the chain 6.

As shown in Figs. 1 and 2, each guide rod 29 is formed by fitting a cylindrical guide member 29b onto an outer circumference of a rod supporting shaft 29a (in Fig. 1, only one supporting shaft is shown by a broken line). The guide rod 29 is supported by the rod supporting shaft 29a, and guides the chain 6 by an outer circumferential surface of the guide member 29b.

The number of the guide rod 29 is not limited to eighteen, but it could be larger or smaller than eighteen. In this case, it is desirable that the same number of the guide rod 29 should be provided between the mutual pinion sprockets 20 (here, at three positions between the three pinion sprockets 20). Further, the more the guide rod 29 is provided, the more the composite sprocket 5 is brought close to a perfect circle, then this makes it possible for the variation in the distance between the chain 6 and the shaft center C1 of the rotation shaft 1 to be smaller. However, this leads to increase in manufacturing cost and increase in weight due to increase in parts count. Thus, it is preferable to set the number of the guide rod 29 with consideration given to these defects.

[1-1-3. Stationary disk and Movable disk]

Each of the stationary disk 10 and the movable disk 19 is provided at both sides (one side and the other side in a direction along the shaft center C1 of the rotation shaft 1) of the plurality of pinions sprockets 20. Thus, the stationary disk 10 and the movable disk 19 at the one side are focused here, and their configurations will be explained.

[1-1-3-1. Stationary disk]

The stationary disk 10 is formed integrally with the rotation shaft 1, or is connected to the rotation shaft 1 so as to rotate integrally with the rotation shaft 1. Here, Fig. 2 shows, as an example, a case where the movable disk 19 and the stationary disk 10 are arranged in order from the side of the plurality of pinion sprockets 20 to an axial direction outer side. As shown in Figs. 3 and 5A to 5C, two types of radial slots (or grooves) of sprocket stationary radial slots 11a, 11b and 11c respectively formed for the pinion sprockets 21, 22 and 23 and rod stationary radial slots 12 (only one slot is denoted by a reference sign 12) formed for the guide rods 29 are formed at the stationary disk 10. Here, in Fig. 3, a revolution direction of a clockwise direction is shown by an open arrow.

The supporting shafts 21a, 22a and 23a of the pinion sprockets 21, 22 and 23 are inserted or fitted in the sprocket stationary radial slots 11a, 11b and 11c respectively. The sprocket stationary radial slot 11a corresponding to the stationary pinion sprocket 21 is a slot (a stationary pinion sprocket guide slot) that guides a radial direction movement of the stationary pinion sprocket 21. Likewise, the sprocket stationary radial slot 11b corresponding to the first rotation pinion sprocket 22 is a slot that guides a radial direction movement of the first rotation pinion sprocket 22. The sprocket stationary radial slot 11c corresponding to the second rotation pinion sprocket 23 is a slot that guides a radial direction movement of the second rotation pinion sprocket 23. Therefore,thesesprocketstationary radial slots 11a, 11b and 11c are formed along the respective radial direction movement paths of the corresponding pinion sprockets 21, 22 and 23.

The rod supporting shaft 29a (only one supporting shaft is denoted by a reference sign 29a) of each guide rod 29 is inserted or fitted in the corresponding rod stationary radial slot 12 (only one slot is denoted by the reference sign 12). Shapes of these stationary radial slots 11a, 11b, 11c and 12 will be described in detail later.

[1-1-3-2. Movable disk]

As shown in Fig. 2, the movable disk 19 is provided at one side and the other side of each pinion sprocket 20 with the pinion sprockets 20 sandwiched between the movable disks 19. These movable disks 19 are connected with each other by connecting shafts 19A. As shown in Fig. 1, the connecting shafts 19A (only one connecting shaft is denoted by a reference sign 19A) are provided between the pinion sprockets 21, 22 and 23. With this structure, one side movable disk 19 and the other side movable disk 19 rotate integrally with each other.

As shown in Figs. 4 and 5A to 5C, two types of movable radial slots (or grooves) of sprocket movable radial slots 19a and rod movable radial slots 19b (shown by a broken line in Figs. 5A to 5C, only each one slot is denoted by a reference sign 19a or 19b) are formed at the movable disk 19 (shown by a broken line in Figs. 5A to 5C). Here, although an outside shape of the movable disk 19 is a circular shape and matches and overlaps an outside shape of the circular stationary disk 10, for the sake of convenience, the circular outside shape of the movable disk 19 is shown with its size reduced in Figs. 5A to 5C. In Fig. 4, a revolution direction of a clockwise direction is shown by an open arrow.

The sprocket movable radial slots 19a are formed so as to intersect the corresponding sprocket stationary radial slots 11a, 11b and 11c. The supporting shafts 21a, 22a and 23a of the pinion sprockets 21, 22 and 23 are positioned in first intersection positions (or at first intersection points) CP1 (only one intersection position is denoted by a reference sign CP1) where the sprocket movable radial slots 19a and the corresponding sprocket stationary radial slots 11a, 11b and 11c intersect with each other. These movable radial slots 19a and 19b will be described in detail later.

[1-1-4. First rotation portion]

As shown in Fig. 2, the first rotation portion 15 is a portion that rotates integrally with the stationary disk 10, i.e. rotates integrally with the rotation shaft 1. The first rotation portion 15 is provided at a part of the rotation shaft 1. The first rotation portion 15 is located at an axial direction outer side with respect to the stationary disk 10 and the movable disk 19.

As shown in Figs. 2, 7 and 8, the first rotation portion 15 is provided with a first cam groove 15a. This first cam groove 15a is formed into a recessed shape along an axial direction of the rotation shaft 1. The first cam groove 15a is formed parallel to the shaft center C1 of the rotation shaft 1. Fig. 7 shows, as an example, a case where three first cam grooves 15a (only one first cam groove is denoted by a reference sign 15a) are provided in three positions in a circumferential direction with these first cam grooves 15a spaced apart from each other. However, a place where the first cam groove 15a is formed and the number of the first cam groove 15a could be set according to a structure close to the first cam groove 15a or specifications, and different shapes and various number of the first cam groove 15a can be applied.

[1-1-5. Second rotation portion]

As shown in Figs. 2, 6 and 7, the second rotation portion 16 is joined to the movable disk 19 through a joining portion 17. Here, in Figs. 6 and 7, a revolution direction of a counterclockwise direction is shown by an open arrow.

First, the joining portion 17 will be explained. The joining portion 17 is formed and arranged so as to rotate integrally with the movable disk 19 and the second rotation portion 16 and cover the stationary disk 10. The joining portion 17 has an axial direction joining portion 17a that covers an outer circumference (a radial direction outer side) of the stationary disk 10 and a radial direction joining portion 17b that covers axial direction outer sides of the stationary disk 10.

More specifically, a joining portion joining a separating portion or component in an axial direction between the movable disk 19 and the second rotation portion 16 is the axial direction joiningportion 17a of the joining portion 17, while a joining portion joining a separating portion or component in a radial direction between the movable disk 19 and the second rotation portion 16 is the radial direction joining portion 17b of the joining portion 17. The axial direction joining portion 17a is formed concentrically with the shaft center C1 of the rotation shaft 1, and has a cylindrical shape that extends in the axial direction of the rotation shaft 1. As shown in Fig. 2, an axial direction inner side of the axial direction joining portion 17a is joined to an outer peripheral end (an outer peripheral portion) 19t of the movable disk 19, and an axial direction outer side of the axial direction joining portion 17a is joined to the radial direction joining portion 17b that will be explained next.

As shown in Figs. 2, 6 and 7, a radial direction outer side of the radial direction joining portion 17b is joined to the axial direction joining portion 17a, and a radial direction inner side of the radial direction joining portion 17b is joined to the second rotation portion 16. The radial direction joining portion 17b is formed concentrically with the shaft center C1 of the rotation shaft 1, and has a disk shape expanding in the radial direction and having opening sections 17c that will be explained next.

As shown in Figs. 6 and 7, the opening sections 17c are provided in the radial direction joining portion 17b. These opening sections 17c are formed in positions corresponding to racks 53 and 54 and pinions 51 and 52 of the mechanical rotation drive mechanism 50 which will be explained later. Fig. 6 shows, as an example, a case where three fan-shaped or sector opening sections 17c are arranged in three positions at regular intervals with the radial direction joining portion 17b being present between adjacent opening sections 17c. However, a shape and the number of the opening section 17c could be set according to a structure close to the opening section 17c or specifications, and different shapes and various number of the opening section 17c can be applied.

Next, the second rotation portion 16 will be explained. As shown in Figs. 2, 6 and 7, the second rotation portion 16 is formed so as to cover an outer periphery (a radial direction outer side) of the first rotation portion 15, and has a cylindrical shape that is concentric with the shaft center C1 of the rotation shaft 1. Here, as shown in Fig. 2, the second rotation portion 16 is formed along the axial direction with a position of the second rotation portion 16 shifted from the outer peripheral end 19t of the movable disk 19 to an inner circumferential side.

As shown in Figs. 2 and 8, the second rotation portion 16 is provided with a second cam groove 16a. This second cam groove 16a is formed so as to adjoin an outer circumference of the first cam groove 15a, and also the second cam groove 16a is provided along the rotation shaft 1 while intersecting the first cam groove 15a. Further, the second cam groove 16a is provided so as to intersect the rotation shaft 1 in the axial direction of the rotation shaft 1. Fig. 7 shows, as an example, a case where the second cam grooves 16a (only one second cam groove is denoted by a reference sign 16a) are provided in three positions in a circumferential direction with these second cam grooves 16a spaced apart from each other. However, a place where the second cam groove 16a is formed and the number of the second cam groove 16a are set according to those of the first rotation portion 15.

[1-1-6. Relative rotation drive mechanism]

The relative rotation drive mechanism 30 has, in addition to the above first cam groove 15a formed in the first rotation portion 15 and the above second cam groove 16a formed in the second rotation portion 16, a cam roller 90 that is disposed in a second intersection position (or at a second intersection point) CP2 where the first cam groove 15a and the second cam groove 16a intersect with each other, an eyeglasses-shaped fork (a sprocket-movement axial direction movement member) 35 that moves the cam roller 90 in the axial direction and an axial direction movement mechanism 31 that moves the eyeglasses-shaped fork 35 in the axial direction.

In the following description, the cam roller 90, the eyeglasses-shaped fork 35 and the axial direction movement mechanism 31 will be explained in this order. As shown in Figs. 2 and 7, the cam roller 90 is cylindrical in shape. The cam roller 90 has an axis that is orthogonal to the shaft center C1 of the rotation shaft 1, and is inserted in the first cam groove 15a and the second cam groove 16a at the second intersection position CP2 where the first cam groove 15a and the second cam groove 16a intersect with each other (only one of them is denoted by a reference sign 90, 15a, 16a and CP2). Therefore, the cam roller 90 rotates on the shaft center C1 of the rotation shaft 1 in concert with the rotation of the rotation shaft 1. Here, bearings are fitted onto an outer periphery of the cam roller 90 in positions corresponding to the first cam groove 15a and the second cam groove 16a.

The cam roller 90 has one end 90a that protrudes from the second intersection position CP2 toward a radial direction outer side. Here, as necessary, a fall-out preventing process is carried out for the cam roller 90 in order for the cam roller 90 not to fall out from the cam grooves 15a and 16a, although this is not shown in the drawings. As the fall-out preventing process, for instance, a head portion is provided at the other end of the cam roller 90 or a fall-out preventing pin is added, thereby preventing a radial direction movement of the cam roller 90 while allowing an axial direction movement of the cam roller 90.

The eyeglasses-shaped fork 35 is provided so as to range or extend from one of the set of two composite sprockets 5, 5 to the other. The eyeglasses-shaped fork 35 has a ring-shaped cam roller supporting portion 35a (only one side cam roller supporting portion is denoted by a reference sign 35a) for each of the composite sprockets 5, 5 and a bridge portion 35b that connects both of the cam roller supporting portions 35a. The first cam groove 15a and the second cam groove 16a are located at an inner circumferential side of the cam roller supporting portion 35a. Here, the eye glasses-shaped fork 35 is a plate member parallel to the disks 10 and 19, and is arranged parallel to the disks 10 and 19 at an axial direction outer side of the disks 10 and 19 with respect to the chain 6.

The cam roller supporting portions 35a has a recessed groove portion 35c throughout an entire circumference of an inner circumferential side of the cam roller supporting portions 35a. The groove portion 35c has a depth corresponding to a protrusion length of the cam roller 90, and accommodates the one end 90a of the cam roller 90. That is, the groove portion 35c has a ring-shaped space whose radial direction length (depth) is the protrusion length of the cam roller 90.

In the groove portion 35c, a rolling member 35d (only one rolling member is denoted by a reference sign 35d) in rolling contact with the cam roller 90 is provided. This rolling member 35d is provided in order to prevent the cam roller 90 that rotates on the shaft center C1 of the rotation shaft 1 from rotating on the axis of the cam roller 90 when the cam roller 90 contacts a side wall of the groove portion 35c. That is, the rolling member 35d is disposed at the cam roller supporting portions 35a that forms the side wall of the groove portion 35c. Here, a plurality of rolling members 35d are disposed throughout an entire circumference of the groove portion 35c. Figs. 2 and 7 show, as an example, a case where a needle roller bearing is used as the rolling member 35d. However, instead of the needle roller bearing, a ball bearing could be used.

The axial direction movement mechanism 31 has, in order to move the eyeglasses-shaped fork 35 in the axial direction, a motor 32, a movement conversion mechanism 33 that converts rotational motion of an output shaft 32a of the motor 32 into linear motion and a fork supporting portion 34 that supports the eyeglasses-shaped fork 35 and moves linearly by the movement conversion mechanism 33. As the motor 32, for instance, a stepping motor can be used.

The axial direction movement mechanism 31 will be explained below in order of the fork supporting portion 34 and the movement conversion mechanism 33 with reference to Figs. 2 and 7. The fork supporting portion 34 is formed into a cylindrical shape having a tubular shaft that is concentric with the output shaft 32a of the motor 32. The output shaft 32a of the motor 32 is inserted in the fork supporting portion 34. The fork supporting portion 34 is provided, at an inner circumference thereof, with a female thread portion 34a into which a male screwportion 32b formed at the output shaft 32a of the motor 32 is screwed. The fork supporting portion 34 is also provided, at an outer circumference thereof, with a recessed fork groove 34b that is engaged with the bridge portion 35b of the eyeglasses-shaped fork 35.

The fork groove 34b has a width (an axial direction length) corresponding to a thickness (an axial direction length) of the bridge portion 35b of the eyeglasses-shaped fork 35. A middle part of the bridge portion 35b (a middle of the two composite sprockets 5, 5) is fitted to the fork groove 34b, then the fork supporting portion 34 and the bridge portion 35b of the eyeglasses-shaped fork 35 are fixedly connected to each other.

The movement conversion mechanism 33 has the male screw portion 32b of the output shaft 32a and the female thread portion 34a of the fork supporting portion 34. When the output shaft 32a rotates, the fork supporting portion 34 where the female thread portion 34a is formed moves in the axial direction by engagement of the male screw portion 32b and the female thread portion 34a. That is, the axial direction movement mechanism 31 converts the rotational motion of the motor 32 into the linear motion by the movement conversion mechanism 33, and by this linear motion, moves the fork supporting portion 34 linearly in the axial direction. The relative rotation drive mechanism 30 including the above eyeglasses-shaped fork 35 and the above axial direction movement mechanism 31 is provided with the relative rotation drive mechanism 30 shifted from the pinion sprockets 21, 22 and 23 in the axial direction.

In the following description, a relative rotation drive of the movable disk 19 with respect to the stationary disk 10 by the relative rotation drive mechanism 30 will be explained. When the fork supporting portion 34 moves linearly in the axial direction by the axial direction movement mechanism 31, the eyeglasses-shaped fork 35 fixedly connected to the fork supporting portion 34 moves integrally with the fork supporting portion 34 in the axial direction, and by and according to this movement, the cam roller 90 also moves in the axial direction.

When the cam roller 90 disposed in the second intersection position CP2 where the first cam groove 15a and the second cam groove 16a intersect with each other moves in the axial direction, the second intersection position CP2 also moves in the axial direction. Since the first rotation portion 15 provided with the first cam groove 15a rotates integrally with the rotation shaft 1 and the stationary disk 10, when the second intersection position CP2 moves in the axial direction, the second rotation portion 16 provided with the second cam groove 16a rotates relatively with respect to the first rotation portion 15.

Since the second rotation portion 16 rotates integrally with the movable disk 19 and the first rotation portion 15 rotates integrally with the stationary disk 10, when the second rotation portion 16 rotates relatively with respect to the first rotation portion 15, the movable disk 19 rotates relatively with respect to the stationary disk 10.

When the movable disk 19 is driven and rotates relatively with respect to the stationary disk 10, as will be described later in explanations of the movement mechanisms 40A and 40B, the first intersection position CP1 where the sprocket stationary radial slots 11a, lib and 11c provided at the stationary disk 10 and the sprocket movable radial slots 19a provided at the movable disk 19 intersect with each other moves in the radial direction. In this manner, the relative rotation drive mechanism 30 drives and relatively rotates the movable disk 19 with respect to the stationary disk 10 by the axial direction movement mechanism 31, and moves the first intersection position CP1 in the radial direction.

[1-1-7. Sprocket movement mechanism and Rod movement mechanism]

Next, the sprocket movement mechanism 40A and the rod movement mechanism 40B will be explained with reference to Figs. 2 and 5A to 5C. The sprocket movement mechanism 40A moves the plurality of pinion sprockets 20 as an obj ect of the movement. The rod movement mechanism 40B moves the plurality of guide rods 29 as an obj ect of the movement. These movement mechanisms 40A and 40B are mechanisms that move the respective objects of the movement (i.e. the plurality of pinion sprockets 20, the plurality of guide rods 29) in the radial direction in synchronization with each other while maintaining equidistance of each of the pinion sprockets 20 and the guide rods 29 from the shaft center C1 of the rotation shaft 1.

The sprocket movement mechanism 40A is formed from the stationary disk 10 where the sprocket stationary radial slots 11a, 11b and 11c in which the supporting shafts 21a, 22a and 23a of the pinion sprockets 21, 22 and 23 are respectively inserted or fitted are formed, the movable disk 19 where the sprocket movable radial slots 19a are formed and the relative rotation drive mechanism 30 (see Figs. 2 and 7).

The rod movement mechanism 40B is formed from the stationary disk 10 where the rod stationary radial slots 12 in which the rod supporting shafts 29a are inserted or fitted are formed, the movable disk 19 where the rod movable radial slots 19b are formed and the relative rotation drive mechanism 30.

As mentioned above, the configurations of the movement mechanisms 40A and 40B are different in only the supporting shaft that is the object of the movement, and other configurations are the same.

Next, movement by the movement mechanisms 40A and 40B will be explained with reference to Figs. 5A to 5C. Fig. 5A shows a case where the supporting shafts 21a, 22a and 23a of the pinion sprockets 21, 22 and 23 (see Figs. 1 and 2) in the radial slots 11a, 11b, 11c and 19a and the rod supporting shafts 29a of the guide rod 29 in the radial slots 12 and 19b are positioned in a closest position from the shaft center C1 of the rotation shaft 1. When a rotation phase of the movable disk 19 is changed with respect to the stationary disk 10 by the relative rotation drive mechanism 30 (see Fig. 2) from a state of Fig. 5A, in order of Fig. 5B, Fig. 5C, the first intersection position CP1 where the sprocket stationary radial slots 11a, 11b and 11c and the sprocket movable radial slots 19a intersect with each other and an intersection position between the rod stationary radial slot 12 and the rod movable radial slot 19b move away from the shaft center C1 of the rotation shaft 1. That is, the pinion sprockets 20 and the guide rod 29 whose supporting shafts 21a, 22a, 23a and 29a are supported in these intersection positions move in the radial direction in synchronization with each other while maintaining the equidistance of each of the pinion sprockets 20 and the guide rods 29 from the shaft center C1 of the rotation shaft 1.

On the other hand, when a direction of the rotation phase of the movable disk 19 is changed to an opposite direction to the above direction of the rotation phase of the movable disk 19 by the relative rotation drive mechanism 30, the pinion sprockets 20 and the guide rod 29 move closer to the shaft center C1 of the rotation shaft 1. When the pinion sprockets 20 move by the sprocket movement mechanism 40A, since mutual distances between the pinion sprockets 20 are changed, the phase shift (the out-of-phase) of the pinion sprockets 20 with respect to the chain 6 occurs. Thus, in order to eliminate the phase shift (the out-of-phase), the mechanical rotation drive mechanism 50 is equipped.

[1-1-8. Mechanical rotation drive mechanism]

Next, the mechanical rotation drive mechanism 50 will be explained with reference to Figs. 2 and 6. Since the mechanical rotation drive mechanism 50 is set symmetrically with respect to the pinion sprockets 20, the mechanical rotation drive mechanism 50 at one side (an upper side in Fig. 2) is focused here, and its configuration will be explained. As mentioned above, the mechanical rotation drive mechanism 50 is the mechanism that mechanically drives the rotation of the rotation pinion sprockets 22, 23 in concert with the sprocket movement mechanism 40A so as to eliminate the phase shift (the out-of-phase) between the pinion sprockets 20 with respect to the chain 6 by rotating the rotation pinion sprockets 22, 23. In other words, the mechanical rotation drive mechanism 50 is the mechanism that drives rotation of the rotation pinion sprockets 22, 23 in concert with the sprocket movement mechanism 40A so as to eliminate the phase shift (the out-of-phase) of the plurality of pinion sprockets 20 with respect to the chain 6, by or associated with the radial direction movement of the plurality of pinion sprockets 20 by the sprocket movement mechanism 40A. Meanwhile, the mechanical rotation drive mechanism 50 has the function of not allowing rotation of the stationary pinion sprocket 21 on its axis during the radial direction movement of the stationary pinion sprocket 21.

First, a configuration of the mechanical rotation drive mechanism 50, which does not allow the rotation of the stationary pinion sprocket 21 (see Fig. 1) on its axis, will be explained. As shown in Fig. 6, the supporting shaft 21a of the stationary pinion sprocket 21 is inserted or fitted in the sprocket stationary radial slot 11a of the stationary disk 10. A guide member 59 is integrally connected to this supporting shaft 21a.

The guide member 59 is inserted or fitted in the sprocket stationary radial slot 11a and is guided in the radial direction. The guide member 59 is formed into such shape that the guide member 59 contacts the sprocket stationary radial slot 11a throughout a predetermined length in the radial direction. Thus, the guide member 59 also serves as a member that, when a rotational force attempting to rotate the stationary pinion sprocket 21 on its axis acts on the stationary pinion sprocket 21, transmits this rotational force to the sprocket stationary radial slot 11a and fixes the stationary pinion sprocket 21 in reaction to the rotational force (i.e. by a drag force). That is, the guide member 59 is formed into such shape that the guide member 59 can slide in the sprocket stationary radial slot 11a in the radial direction and has a rotation-stop function. Here, the predetermined length here is such length that the drag force of the rotational force rotating the stationary pinion sprocket 21 on its axis can be secured.

Fig. 6 shows, as an example, a case where the sprocket stationary radial slot 11a is formed into a rectangular shape having a longitudinal direction in the radial direction, and the guide member 59 is formed into a rectangular shape that is smaller than the rectangular shape of the sprocket stationary radial slot 11a. Here, if bearings are provided on side walls of the guide member 59 which contact inner walls of the sprocket stationary radial slot 11a, especially on four corners of the guide member 59, a smoother sliding motion of the guide member 59 can be ensured.

Next, a configuration of the mechanical rotation drive mechanism 50, which drives the rotation of the rotation pinion sprockets 22, 23, will be explained. The mechanical rotation drive mechanism 50 has pinions 51 and 52 that are fixedly connected to the supporting shafts 22a and 23a of the rotation pinion sprockets 22 and 23 so as to rotate integrally with the supporting shafts 22a and 23a and racks 53 and 54 that are formed so as to mesh with the pinions 51 and 52 respectively.

The pinions 51 and 52 are formed at axial direction end portions of the supporting shafts 22a and 23a of the rotation pinion sprockets 22 and 23 respectively. The racks 53 and 54 corresponding to the pinions 51 and 52 are fixed to the stationary disk 10 along respective extending directions of the sprocket stationary radial slots 11b and 11c.

In the following description, to make a distinction, the pinion (an advanced side pinion) 51 of the first rotation pinion sprocket 22 is called a first pinion 51, and the rack (an advanced side rack) 53 meshed with this first pinion 51 is called a first rack 53. Likewise, the pinion (a retarded side pinion) 52 of the second rotation pinion sprocket 23 is called a second pinion 52, and the rack (a retarded side rack) 54 meshed with this second pinion 52 is called a second rack 54.

As shown in Fig. 6, the first rack 53 is disposed at a retarded side with respect to the first pinion 51 with the revolution direction being a reference direction, while the second rack 54 is disposed at an advanced side with respect to the second pinion 52 with the revolution direction being a reference direction. Therefore, the pinions 51 and 52 and the racks 53 and 54 are configured so that when the pinions 51 and 52 move in a diameter-widening direction or in a diameter-reducing direction, the pinions 51 and 52 rotate in mutually opposite directions by the racks 53 and 54 with which the pinions 51 and 52 mesh.

That is, the mechanical rotation drive mechanism 50 is a mechanism that sets rotation phases of the rotation of the rotation pinion sprockets 22 and 23 on their axes in accordance with a radial direction position of each of the pinion sprockets 20 that are moved by the sprocket movement mechanism 40A. That is to say, by the mechanical rotation drive mechanism 50, the radial direction position of the pinion sprockets 20 and the rotation phases of the rotation of the rotation pinion sprockets 22 and 23 on their axes are in a one-to-one relationship. In this manner, the mechanical rotation drive mechanism 50 guides the stationary pinion sprocket 21 so that the stationary pinion sprocket 21 does not rotate on its axis, and guides the rotation pinion sprockets 22 and 23 so that the rotation pinion sprockets 22 and 23 rotate on their axes.

Here, except for a difference in positional relationship between the racks 53 and 54 with respect to the respective pinions 51 and 52, the first pinion 51 and the second pinion 52 have the same structure, and the first rack 53 and the second rack 54 have the same structure. Further, instead of the phase shift (out-of-phase) allowable power transmission mechanism, the first rotation pinion sprocket 22 could be provided with a disc spring inserted between the supporting shaft 22a and the first pinion 51. By this disc spring, a slight rotation of the supporting shaft 22a with respect to the first pinion 51 is allowed and a relative rotation of the supporting shaft 22a is restrained, thereby absorbing engagement shock of the first rotation pinion sprocket 22 and the chain 6 which could occur during the transmission ratio change. This disc spring might be provided at the stationary pinion sprocket 21 and the second rotation pinion sprocket 23.

[1-1-9. Interlock mechanism]

The interlock mechanism 60 is a mechanism that can interlock the widening and reduction (of the circumcircle radii) of the two composite sprockets 5, 5. Basically, by the interlock mechanism 60, when the input side composite sprocket 5 is widened, the output side composite sprocket 5 is reduced, while when the input side composite sprocket 5 is reduced, the output side composite sprocket 5 is widened. The interlock mechanism 60 works so that, in a case where the transmission ratio of the transmission mechanism is changed to the uniform transmission ratio, if an actual chain length, which is a real length of the chain 6 with respect to a geometrical chain length when the widening of the circumcircle radius of the one composite sprocket 5 and the reduction of the circumcircle radius of the other composite sprocket 5 are carried out by the same amount, is greater than a predetermined length, an amount of the reduction of the other composite sprocket 5 is set to be smaller than an amount of the widening of the one composite sprocket 5, while if the actual chain length is not greater than the predetermined length, the amount of the widening of the one composite sprocket 5 and the amount of the reduction of the other composite sprocket 5 are set to be the same.

As a prerequisite for explanation of the interlock mechanism 60, the geometrical chain length and setting of the number of teeth of each composite sprocket 5 will be explained in the following explanation. Subsequently, the stationary radial slots 11a, 11b, 11c and 12 formed on the stationary disk 10 and the movable radial slots 19a and 19b formed on the movable disk 19, which are related to the interlock mechanism 60, will be explained.

[1-1-9-1. Geometrical chain length]

First, the geometrical chain length will be explained with reference to Fig. 9. The geometrical chain length is a geometrical circumference that is a length of an ideal chain 6i wound around the input side composite sprocket 5 and the output side composite sprocket 5 without excess and deficiency of the chain length. In other words, the geometrical chain length is a theoretical chain length (a calculative chain length) without slack and tension of the ideal chain 6i.

More specifically, the geometrical chain length $L_g$ can be expressed by the following Expression (1) using a distance (hereinafter, called an "interaxial distance") $D_c$ between an axis center C1 of the input side composite sprocket 5 and an axis center C1 of the output side composite sprocket 5, a circumcircle radius rp of the input side composite sprocket 5, a circumcircle radius $r_s$ of the output side composite sprocket 5, and a phase (hereinafter, called a "wound phase") $\theta_w$ at which a curve segment of the circumcircle which the ideal chain 6i contacts is changed to a straight line segment or the straight line segment is changed to the curve segment with respect to a reference line S1 (only one reference line is denoted by a reference sign S1) that is orthogonal to a line connecting the two axis centers C1, C1. Here, the wound phase $\theta_w$ could also be a phase that defines a boundary between a segment where the ideal chain 6i contacts the circumcircle radius of the composite sprocket 5 and a segment where the ideal chain 6i separates from the circumcircle radius of the composite sprocket 5 with the reference line S1 being a reference.

[Expression 1]

$$L_g = 2\sqrt{D_c^2 - (r_p - r_s)^2} + 2\pi\{r_p(180 - 2\theta_w)/360 + r_s(180 + 2\theta_w)/360\} \quad \cdots (1)$$

In a case, like a related art, where the widening or reduction of the one composite sprocket and the reduction or widening of the other composite sprocket are carried out by the same amount, the geometrical chain length Lg expressed by the above Expression (1) is the longest when the transmission ratio of the transmission mechanism is a Lowest or a Highest (in Fig. 9, the chain at the Highest is shown by a solid line), while the geometrical chain length $L_g$ is the shortest when the transmission ratio of the transmission mechanism is the uniform transmission ratio (shown by a two-dot chain line in Fig. 9). In the fowling explanation, a geometrical chain length $L_g$ when the transmission ratio of the transmission mechanism is the Lowest or the Highest is called a maximum geometrical chain length $L_{gmax}$.

If the real chain length is set to a chain length that is equal to the geometrical chain length Lg of the case, like the related art, where the transmission ratio of the transmission mechanism is the uniform transmission ratio, when intending to change the transmission ratio from the uniform transmission ratio, since the chain is stretched tight or is under tension, it is impossible to change the transmission ratio. Therefore, the real length (hereinafter, called an "actual chain length") $L_r$ of the chain 6 of the present transmission mechanism is set according to the maximum geometrical chain length $L_{gmax}$.

Here, as a prerequisite for setting the actual chain length $L_r$, a length (hereinafter, called a "no-load actual chain length") $L_{r1}$ of the chain 6 on which no load acts, i.e. a length $L_{r1}$ of a no-stretched chain 6, and a length (hereinafter, called a "load actual chain length") $L_{r2}$ of the chain 6 on which allowable maximum load acts, i.e. a length $L_{r2}$ of a most stretched chain 6, will be explained. The no-load actual chain length $L_{r1}$ and the load actual chain length $L_{r2}$ can be expressed by the following Expression (2) using a stretch factor k.

[Expression 2]

$$L_{r2} = kL_{r1} = 2kZU_c \quad \cdots (2)$$

Z in the above Expression (2) means an integer, and $U_c$ means a unit link length when no load acts on the chain 6. Therefore, a length obtained by multiplying the unit link length $U_c$ by an even-number link number (2Z) is the no-load actual chain length $L_{r1}$, and a length obtained by multiplying this no-load actual chain length $L_{r1}$ by the stretch factor k is the load actual chain length $L_{r2}$.

Next, setting of the actual chain length $L_r$ will be explained. Here, the actual chain length $L_r$ used in the following explanation is used as the same meaning as the above no-load actual chain length $L_{r1}$. The actual chain length $L_r$ is set with consideration given to the stretch of the chain 6. More specifically, the actual chain length $L_r$ is set so as to satisfy the following Expression (3).

[Expression 3]

$$\frac{L_{gmax}}{k} < L_r = 2Z_{min}U_c \quad \cdots (3)$$

As expressed in the above Expression (3), the actual chain length $L_r$ is set to a length obtained by multiplying the unit link length $U_c$ by the smallest even number (= $2Z_{min}$), from among lengths that are greater than a length obtained by subtracting a stretch (corresponding to the stretch factor k) of the load actual chain length $L_{r2}$ from the maximum geometrical chain length $L_{gmax}$ indicated at the leftmost side of the Expression (3). In other words, the link number (the number of links) of the chain 6 is set to an even number that satisfies conditions that the no-load actual chain length $L_{r1}$ is longer than a length obtained by subtracting the stretch (corresponding to the stretch factor k) of the load actual chain length $L_{r2}$ from the maximum geometrical chain length $L_{gmax}$, and also is closest to this length. This is equivalent to set the actual chain length $L_r$ to a length including the stretch of the load actual chain length $L_{r2}$ and to set this load actual chain length $L_{r2}$ (here, equal to $L_r$) to be greater than the maximum geometrical chain length $L_{gmax}$.

[1-1-9-2. Setting of the number of teeth of composite sprocket]

Next, setting of the number of teeth of each of the composite sprockets 5, 5 will be explained with reference to Table 1 and corresponding Fig. 10. Here, Table 1 is an example, and a value of each parameter can be set as appropriate according to contents described in the following explanation.

[Table 1]

Here, as an example, regarding each of the number of teeth Tp of the input side composite sprocket 5 and the number of teeth $T_s$ of the output side composite sprocket 5, 30 is the minimum and 70 is the maximum. The unit link length $U_c$ of the chain 6 is 6 mm, and the link number (the number of links) of the chain 6 is 108 links. The actual chain length $L_r$ is thus 648 mm. Further, as the stretch factor k, it is 1.0042. As an after-mentioned predetermined length $\alpha$, it is 3.3 mm (a length equivalent to 0.55 link of the unit link length $U_c$). Each of these parameters could be set according to these structures or specifications, and different values could be used.

In the following explanation, the setting of the number of teeth of each of the composite sprockets 5, 5, of a case where the transmission ratio is changed from the Lowest state (the number of teeth Tp of the input side composite sprocket 5 is 30 and the number of teeth $T_s$ of the output side composite sprocket 5 is 70, which corresponds to STEP 1 in Table 1) toward the uniform transmission ratio (here, $T_p$ and $T_s$ (both of the number of teeth of the input side and output side composite sprockets 5, 5) are 51), will be explained.

If slack of the chain 6 is not greater than the predetermined length, the interlock mechanism 60 increases the number of teeth $T_p$ of the input side composite sprocket 5 by one (widens the circumcircle radius of the input side composite sprocket 5 by one step equivalent to an increased one tooth) and at the same time decreases the number of teeth $T_s$ of the output side composite sprocket 5 by one (reduces the circumcircle radius of the output side composite sprocket 5 by one step equivalent to a decreased one tooth) in each speed change step (corresponding to each STEP in Table 1 and Fig. 10). That is, the interlock mechanism 60 makes a widening amount of the circumcircle radius of the input side composite sprocket 5 and a reduction amount of the circumcircle radius of the output side composite sprocket 5 the same. On the other hand, if the slack of the chain 6 is greater than the predetermined length, the interlock mechanism 60 stops the decrease of the number of teeth $T_s$ of the output side composite sprocket 5 (the reduction of the circumcircle radius of the output side composite sprocket 5) in each speed change step. In other words, if the slack of the chain 6 is greater than the predetermined length, the interlock mechanism 60 sets the reduction amount of the circumcircle radius of the output side composite sprocket 5 to be smaller than the widening amount of the circumcircle radius of the input side composite sprocket 5.

More specifically, when the following Expression (4) is satisfied, i.e. when the slack of the chain 6 is the predetermined length $\alpha$ or less, the number of teeth Tp of the input side composite sprocket 5 is increased by one (i.e. $T_p$+1) and also the number of teeth $T_s$ of the output side composite sprocket 5 is decreased by one (i.e. $T_s$-1) . On the other hand, when the following Expression (4) is not satisfied, i.e. when the slack of the chain 6 is greater than the predetermined length $\alpha$, the number of teeth $T_p$ of the input side composite sprocket 5 is increased by one (i.e. $T_p$+1), while the number of teeth $T_s$ of the output side composite sprocket 5 is maintained.

[Expression 4]

$$L_r - L_g \leq \alpha \quad \cdots (4)$$

As described above, the predetermined length $\alpha$ is set empirically and experimentally as a threshold value for judging the slack of the chain 6. This predetermined length $\alpha$ can be set to a value that is close to a safety side (a stretched-tight side) having a certain margin with respect to an allowable maximum slack of the chain 6 upon operation of the present transmission mechanism.

In the following description, the setting of the number of teeth of each of the composite sprockets 5, 5 in each step will be explained with reference to Table 1 and Fig. 10. When the number of teeth Tp of the input side composite sprocket 5 is shifted in sequence from 30 to 35 and also the number of teeth $T_s$ of the output side composite sprocket 5 is shifted in sequence from 70 to 65 (corresponding to STEPs 1 to 6), a difference (corresponding to the slack of the chain 6) between the actual chain length $L_r$ and the geometrical chain length Lg is smaller than the predetermined length $\alpha$. Therefore, the widening amount of the circumcircle radius of the input side composite sprocket 5 and the reduction amount of the circumcircle radius of the output side composite sprocket 5 are set to be the same.

Next, when the number of teeth Tp of the input side composite sprocket 5 is shifted from 35 to 36 and also the number of teeth $T_s$ of the output side composite sprocket 5 is shifted from 65 to 64 (corresponding to STEP 7), the difference (corresponding to the slack of the chain 6) between the actual chain length $L_r$ and the geometrical chain length Lg is greater than the predetermined length $\alpha$. Because of this, upon change of the transmission ratio to the next step (corresponding to shift to STEP 8), the number of teeth Tp of the input side composite sprocket 5 is shifted from 36 to 37, while the number of teeth $T_s$ of the output side composite sprocket 5 is maintained to 64.

Subsequently, when the number of teeth Tp of the input side composite sprocket 5 is shifted in sequence from 37 to 41 and also the number of teeth $T_s$ of the output side composite sprocket 5 is shifted in sequence from 64 to 60 (corresponding to STEPs 8 to 12), the difference (corresponding to the slack of the chain 6) between the actual chain length $L_r$ and the geometrical chain length Lg is smaller than the predetermined length $\alpha$, and thus the widening amount of the input side composite sprocket 5 and the reduction amount of the output side composite sprocket 5 are set to be the same.

Next, when the number of teeth Tp of the input side composite sprocket 5 is shifted from 41 to 42 and also the number of teeth $T_s$ of the output side composite sprocket 5 is shifted from 60 to 59 (corresponding to STEP 13), the difference (corresponding to the slack of the chain 6) between the actual chain length $L_r$ and the geometrical chain length $L_g$ is greater than the predetermined length $\alpha$. Because of this, upon change of the transmission ratio to the next step (corresponding to shift to STEP 14), the number of teeth $T_p$ of the input side composite sprocket 5 is shifted from 42 to 43, while the number of teeth $T_s$ of the output side composite sprocket 5 is maintained to 59.

Subsequently, when the number of teeth Tp of the input side composite sprocket 5 is shifted in sequence from 43 to 51 and also the number of teeth $T_s$ of the output side composite sprocket 5 is shifted in sequence from 59 to 51 (corresponding to STEPs 14 to 22), the difference (corresponding to the slack of the chain 6) between the actual chain length $L_r$ and the geometrical chain length Lg is smaller than the predetermined length $\alpha$, and thus the widening amount of the input side composite sprocket 5 and the reduction amount of the output side composite sprocket 5 are set to be the same. Although a detailed explanation is omitted here, the number of teeth $T_p$ of the input side composite sprocket 5 and the number of teeth $T_s$ of the output side composite sprocket 5 of a case where the transmission ratio is changed from the Highest to the uniform transmission ratio are opposite to those of the above case where the transmission ratio is changed from the Lowest to the uniform transmission ratio.

[1-1-9-3. Radial slot of Disk]

The interlock mechanism 60 shifts, as explained above, $T_p$ and $T_s$ of the composite sprockets 5, 5 (the number of teeth $T_p$ and $T_s$ of the composite sprockets 5, 5) in sequence as shown in Table 1 and Fig. 10. To perform this shift, the interlock mechanism 60 has the stationary disk 10 where the stationary radial slots 11a, 11b, 11c and 12 are formed and the movable disk 19 where the movable radial slots 19a and 19b are formed and the relative rotation drive mechanism 30. The interlock mechanism 60 explained here is a mechanism that mechanically interlocks the widening and reduction of the two composite sprockets 5, 5 by the eyeglasses-shaped fork 35 provided so as to range or extend from one of the set of two composite sprockets 5, 5 to the other. The interlock mechanism 60 changes the number of teeth $T_p$ and $T_s$ of the composite sprockets 5, 5 as explained above by setting each of shapes of the stationary radial slots 11a, 11b, 11c and 12 of the stationary disk 10 and each of shapes of the movable radial slots 19a and 19b of the movable disk 19.

That is, the shapes of the radial slots 11a, 11b, 11c, 12, 19a and 19b are set so that, by the relative rotation of the movable disk 19 with respect to the stationary disk 10, the intersection positions (the intersection points) between the stationary radial slots 11a, 11b, 11c and 12 and the movable radial slots 19a and 19b are positioned in radial direction positions corresponding to the number of teeth $T_p$ and $T_s$ of the composite sprockets 5, 5. In the following description, the stationary radial slots 11a 11b, 11c and 12 and the movable radial slots 19a and 19b will be explained in this order.

[1-1-9-3-1. Stationary radial slot]

As shown in Fig. 3, since the sprocket stationary radial slots 11a, 11b and 11c have the same structure except for a difference in an arranged position, the sprocket stationary radial slot 11a is focused here, and its structure will be explained in the following description. Further, in the explanation about the sprocket stationary radial slot 11a, the stationary pinion sprocket 21 is simply called the pinion sprocket 21. In the present embodiment, the sprocket stationary radial slot 11a is formed linearly along a radial direction $\theta_s$ of the stationary disk 10.

The rod stationary radial slots 12 have the same structure except for a difference in an arranged position. In the present embodiment, in the same manner as the sprocket stationary radial slot 11a, the rod stationary radial slot 12 is formed linearly along the radial direction of the stationary disk 10. The rod stationary radial slots 12 are arranged according to the arrangement of the sprocket stationary radial slots 11a, 11b and 11c so that wherever the pinion sprockets 20 (see Fig. 1) are located in the radial direction, the guide rods 29 are positioned at regular intervals between the adjacent pinion sprockets 20.

[1-1-9-3-2. Movable radial slot]

As shown in Figs. 4 and 5A to 5C, the sprocket movable radial slots 19a have the same structure except for a difference in an arranged position. Since these sprocket movable radial slots 19a are provided so as to intersect the corresponding sprocket stationary radial slots 11a, 11b and 11c, the rotation phase of the movable disk 19 with respect to the stationary disk 10 and the radial direction position of the pinion sprocket 20 of each composite sprocket 5 correspond to the shape of the sprocket movable radial slots 19a.

In the following explanation, the sprocket movable radial slot 19a corresponding to the stationary pinion sprocket 21 is focused here, and this sprocket movable radial slot 19a will be explained. In the explanation about the sprocket movable radial slot 19a and the rod movable radial slot 19b, the stationary pinion sprocket 21 is simply called the pinion sprocket 21. Here, relative rotation angles of the movable disk 19 with respect to the stationary disk 10, which correspond to the speed change steps (corresponding to STEPs in Table 1 and Fig. 10), are set to be equal to each other. However, the relative rotation angles of the movable disk 19, corresponding to the speed change steps, could be set to be unequal, then the sprocket movable radial slot 19a having a shape corresponding to these speed change steps could be used.

A section of the sprocket movable radial slot 19a, which corresponds to the speed change step in which the number of teeth Tp of the input side composite sprocket 5 is increased by one and at the same time the number of teeth $T_s$ of the output side composite sprocket 5 is decreased by one, is formed so as to incline or curve toward a circumferential direction (here, a direction opposite to the revolution direction) with respect to a radial direction, as the sprocket movable radial slot 19a extends toward an outer circumference of the movable disk 19. As shown in Fig. 4, for instance, an inner circumferential side end portion 191 of the sprocket movable radial slot 19a inclines or curves with respect to a radial direction $\theta_c$ corresponding to this phase. The radial direction $\theta_c$ here corresponds to a direction of a radial direction line passing through the axial center at a phase of the inner circumferential side end portion 191.

On the other hand, a section of the sprocket movable radial slot 19a, which corresponds to the speed change step (corresponding to steps 7~8, 13~14, 30~31, 36~37 in Table 1) in which the number of teeth T of either one of the composite sprockets 5, 5 is maintained, is formed into a shape along the circumferential direction of the movable disk 19, i.e. a shape by which a radial direction position of the intersection point between the sprocket movable radial slot 19a and the sprocket stationary radial slot 11a is maintained. When focusing attention on the sprocket movable radial slot 19a of the input side composite sprocket 5, as shown in Fig. 11, a section of the sprocket movable radial slot 19a, which corresponds to the speed change step (corresponding to steps 30~31, 36~37 in Table 1 and Fig. 10) in which the number of teeth $T_p$ is maintained, is formed into a shape along the circumferential direction of the movable disk 19. And, a section of the sprocket movable radial slot 19a, which corresponds to the other speed change steps, is formed so as to incline or curve toward the circumferential direction with respect to the radial direction.

Although a detailed explanation is omitted here, likewise, each section of the sprocket movable radial slot of the output side composite sprocket 5, which corresponds to the speed change step (corresponding to steps 7~8, 13~14 in Table 1 and Fig. 10) in which the number of teeth $T_s$ is maintained, is formed into a shape along the circumferential direction r1, r2 of the movable disk 19. And, a section of the sprocket movable radial slot, which corresponds to the other speed change steps, is formed so as to incline or curve toward the circumferential direction with respect to the radial direction. As explained above, the sprocket stationary radial slots 11a, 11b and 11c and the sprocket movable radial slot 19a are formed into the respective shapes by which in the case where the transmission ratio is changed toward the uniform transmission ratio, when the actual chain length $L_r$ with respect to the geometrical chain length Lg is greater than the predetermined length $\alpha$, the reduction amount of the circumcircle radius of the output side composite sprocket 5 is smaller than the widening amount of the circumcircle radius of the input side composite sprocket 5, and also when the actual chain length $L_r$ with respect to the geometrical chain length Lg is not greater than the predetermined length $\alpha$, the widening amount of the circumcircle radius of the input side composite sprocket 5 and the reduction amount of the circumcircle radius of the output side composite sprocket 5 are the same.

As shown in Figs. 4 and 5A to 5C, the rod movable radial slots 19b are provided so as to intersect the corresponding rod stationary radial slots 12, and the rod supporting shafts 29a are located in these intersection positions. The rod movable radial slots 19b have the same structure except for a difference in an arranged position. In the same manner as the sprocket movable radial slot 19a, a section of the rod movable radial slots 19b, which corresponds to the speed change step in which the number of teeth $T_p$ of the input side composite sprocket 5 is increased by one and at the same time the number of teeth $T_s$ of the output side composite sprocket 5 is decreased by one, is formed so as to incline or curve toward the circumferential direction (here, a direction opposite to the revolution direction) with respect to the radial direction, as the rod movable radial slots 19b extends toward an outer circumference of the movable disk 19. And, a section of the rod movable radial slots 19b, which corresponds to the speed change step (corresponding to steps 7~8, 13~14, 30~31, 36~37 in Table 1) in which the number of teeth T of either one of the composite sprockets 5, 5 is maintained, is formed into a shape along the circumferential direction of the movable disk 19, i.e. a shape by which a radial direction position of the intersection point between the rod movable radial slots 19b and the rod stationary radial slot 12 is maintained.

Here, Figs. 4 and 5A to 5C show, as an example, a case where six rod movable radial slots 19b are provided between adjacent two of the sprocket stationary radial slots 11a, 11b and 11c, and an inclination angle (or a curve angle) of each rod movable radial slot 19b with respect to the radial direction becomes greater toward the revolution direction when comparing (viewing) the inclination angles in the same radial direction position. The rod movable radial slots 19b are arranged according to the arrangement of the rod stationary radial slots 12 so that wherever the pinion sprockets 20 (see Fig. 1) are located in the radial direction, the guide rods 29 are positioned at regular intervals between the adjacent pinion sprockets 20.

However, the inclination angles of each rod movable radial slot 19b with respect to the radial direction in the same radial direction position could be set to be equal to each other. As explained above, each of the movable radial slots 19a and 19b has a stepped slot shape having a step that is formed in a position corresponding to the speed change step in which the number of teeth T of either one of the composite sprockets 5, 5 is maintained.

[1-2. Chain]

Next, the chain 6 will be explained.

As shown in Fig. 12, the chain 6 guided by the guide rod 29 has chains corresponding to the number of rows of the gear of the pinion sprockets 21, 22 and 23 (here, three rows). In this embodiment, three of chains; a first chain 6A, a second chain 6B and a third chain 6C, are provided.

These chains 6A, 6B and 6C are wound around the pinion sprockets 20 so as to shift in a power transmission direction with a pitch shifted between them. Here, the chains 6A, 6B and 6C are mutually shifted by 1/3 pitch. A phase of each of teeth 21c, 22c and 23c (hereinafter, called a tooth 20c) of the pinion sprockets 20, which is engaged with the respective chains 6A, 6B and 6C, is shifted according to the shift of the pitch. Except for the setting of the pitch, the chains 6A, 6B and 6C have the same structure or configuration.

Here, two chains or four or more chains could be used depending on the transmission torque of the transmission mechanism. In this case, it is desirable that each chain be shifted by "1/the number of chains" pitch.

[2. Working and effect]

The transmission mechanism according to the embodiment of the present invention is configured as described above. Therefore, the following working and effect can be obtained. In the case where the transmission ratio is changed toward the uniform transmission ratio, the interlock mechanism 60 works as follows.

When the actual chain length $L_r$ with respect to the geometrical chain length Lg is greater than the predetermined length $\alpha$, the interlock mechanism 60 sets the reduction amount of the circumcircle radius of the output side composite sprocket 5 to be smaller than the widening amount of the circumcircle radius of the input side composite sprocket 5. Therefore, when the actual chain length $L_r$ with respect to the geometrical chain length $L_g$, i.e. the difference between the actual chain length $L_r$ and the geometrical chain length $L_g$, is greater than the predetermined length $\alpha$, the reduction amount of the circumcircle radius on the output side is set to be smaller than the widening amount of the circumcircle radius on the input side, thereby suppressing an increase of the difference between the actual chain length $L_r$ and the geometrical chain length $L_g$ and suppressing the slack of the chain 6.

Further, when the actual chain length $L_r$ with respect to the geometrical chain length Lg is not greater than the predetermined length $\alpha$, the interlock mechanism 60 sets the widening amount of the circumcircle radius on the input side and the reduction amount of the circumcircle radius on the output side to be the same. Therefore, when the difference between the actual chain length $L_r$ and the geometrical chain length Lg is the predetermined length $\alpha$ or less, which is a case where no slack or almost no slack occurs in the chain 6, the reduction amount of the circumcircle radius on the output side is set to be the same as the widening amount of the circumcircle radius on the input side, thereby suppressing a change of the geometrical chain length $L_g$ and suppressing the slack of the chain 6.

Since the load actual chain length $L_{r2}$ is set to be greater than the maximum geometrical chain length $L_{gmax}$, the actual chain length $L_r$ is greater than the maximum geometrical chain length $L_{gmax}$ all the time, then a state incapable of speed change due to the stretch-tight of the chain does not appear. Since the actual chain length $L_r$ is set on the basis of the geometrical chain length $L_g$ and the stretch of the load actual chain length $L_{r2}$, a setting range of the actual chain length $L_r$ canbe expanded by a length of the stretch, as compared with a case where the stretch of the load actual chain length $L_{r2}$ is not taken into consideration.

If the number of teeth $T_p$ and $T_s$ of the composite sprockets 5, 5 are not an integer, there is a risk that phase shift (out-of-phase) will occur between the apparent teeth and a groove of the chain 6. In contrast to this, the widening and reduction of the composite sprockets 5, 5 of the present transmission mechanism are carried out so that the integers of the number of teeth Tp and $T_s$ of the composite sprockets 5, 5 are shifted in sequence. It is thus possible to suppress the phase shift (the out-of-phase) between the composite sprocket 5 and the chain 6. With this, the chain 6 can be properly wound around the composite sprockets 5, 5, and a smooth power transmission can be achieved. Here, during the change of the transmission ratio, namely, during the change of the number of teeth $T_p$ and $T_s$ of the composite sprockets 5, 5, although a state in which the number of teeth $T_p$ and $T_s$ becomes a non-integer appears momentarily and the phase shift (the out-of-phase) of the chain 6 occurs during the shift of the number of teeth $T_p$ and $T_s$, the phase shift (the out-of-phase) can actively be absorbed by the above-mentioned phase shift (out-of-phase) allowable power transmission mechanism or the disc spring. However, even if this mechanism or this spring is not provided, since a time required for the speed change (a shift time of the number of teeth $T_p$ and $T_s$ of the composite sprockets 5, 5) is instantaneous (or momentary) time and the speed change is completed before drop-off of the chain 6 or noises due to the slack of the chain 6 occurs, the phase shift (the out-of-phase) is practically insignificant.

As described above, when the integers of the number of teeth $T_p$ and $T_s$ of the composite sprockets 5, 5 are shifted in sequence, if the slack of the chain 6 is not greater than the predetermined length $\alpha$ in each speed change step, the interlock mechanism 60 increases the number of teeth $T_p$ of the input side composite sprocket 5 by one (widens the circumcircle radius of the input side composite sprocket 5 by one step) and at the same time decreases the number of teeth $T_s$ of the output side composite sprocket 5 by one (reduces the circumcircle radius of the output side composite sprocket 5 by one step). Therefore, the change of the geometrical chain length $L_g$ can be suppressed, and the slack of the chain 6 can be suppressed. On the other hand, if the slack of the chain 6 is greater than the predetermined length $\alpha$ in each speed change step, the interlock mechanism 60 stops the decrease of the number of teeth $T_s$ of the output side composite sprocket 5 (the reduction of the circumcircle radius of the output side composite sprocket 5). Therefore, the increase of the difference between the actual chain length $L_r$ and the geometrical chain length Lg can be suppressed, and the slack of the chain 6 can be suppressed.

The sprocket stationary radial slots 11a, 11b and 11c and the sprocket movable radial slot 19a are formed into the respective shapes by which in the case where the transmission ratio is changed toward the uniform transmission ratio, when the actual chain length $L_r$ with respect to the geometrical chain length Lg is greater than the predetermined length $\alpha$, the reduction amount of the circumcircle radius of the output side composite sprocket 5 is smaller than the widening amount of the circumcircle radius of the input side composite sprocket 5, and also when the actual chain length $L_r$ with respect to the geometrical chain length Lg is not greater than the predetermined length $\alpha$, the widening amount of the circumcircle radius of the input side composite sprocket 5 and the reduction amount of the circumcircle radius of the output side composite sprocket 5 are the same. Therefore, the interlock mechanism 60 can suppress the slack of the chain 6 through the pinion sprockets 20 and the guide rods 29.

Further, since the interlock mechanism 60 has the relative rotation drive mechanism 30 having the eyeglasses-shaped fork 35 provided so as to range or extend from one of the set of two composite sprockets 5, 5 to the other, the interlock mechanism 60 can interlock the number of teeth $T_p$ and $T_s$ of the composite sprockets 5, 5. In this manner, the interlock mechanism 60 can mechanically interlock the number of teeth $T_p$ and $T_s$ of the composite sprockets 5, 5 without using a control program, and can suppress the slack of the chain 6.

Since the sprocket stationary radial slots 11a, 11b and 11c are formed linearly along the radial direction of the stationary disk 10, when torque is transmitted by the composite sprockets 5, 5, a reaction force (here, called a torque reaction force) acting through the rotation shaft 1 and the supporting shafts 21a, 22a and 23a of the pinion sprockets 21, 22 and 23 at the stationary disk 10 that inputs and outputs rotation power can act on wall portions of the sprocket stationary radial slots 11a, 11b and 11c along the circumferential direction, then movements of the pinion sprockets 21, 22 and 23 to the radial direction by the torque reaction force can be suppressed. Further, since the stationary radial slots 11a, 11b, 11c and 12 are formed linearly, these radial slots can be readily formed, thereby suppressing increase in manufacturing cost.

[Others]

Although the present invention has been explained on the basis of the embodiment above, the present invention is not limited to the embodiment described above. Configuration or structure in the above embodiment includes all design modifications and equivalents belonging to the technical scope of the present invention. Each configuration or structure in the above embodiment can be omitted, selected and combined, as necessary. The actual chain length $L_r$ could be set on the basis of the geometrical chain length Lg with no consideration given to the stretch of the chain 6. That is, the actual chain length $L_r$ could be set to a length obtained by multiplying the unit link length $U_c$ by the smallest even number, from among lengths that are greater than the maximum geometrical chain length $L_{gmax}$. In this case, the chain 6 is wound around the composite sprockets 5, 5 without stretch during no power transmission, and durability of the chain 6 can be increased.

Further, the present invention is not limited to the transmission mechanism in which integers of the number of teeth of the composite sprockets 5, 5 are shifted to the other integers in sequence when changing the transmission ratio, and it could be a transmission mechanism that performs stepless shift (stepless speed change) by widening and reducing the circumcircle radii of the composite sprockets 5, 5. In this case, in the same manner as the above embodiment, when the slack of the chain 6 is greater than the predetermined length, the interlock mechanism 60 sets the reduction amount of the circumcircle radius of the output side composite sprocket 5 to be smaller than the widening amount of the circumcircle radius of the input side composite sprocket 5. The sprocket movable radial slot 19a of this case is not limited to the above stepped slot shape. The sprocket movable radial slot 19a could be formed into a shape (partly shown by a two-dot chain line in Fig. 11) whose radial direction position corresponding to a speed change step in which the slack of the chain 6 is greater than the predetermined length smoothly continues or extends.

As an interlock unit, the above embodiment shows the interlock mechanism 60 mechanically interlocking the widening and reduction of the circumcircle radii of the two composite sprockets 5, 5 by the eyeglasses-shaped fork 35. However, the following interlock unit (interlock mechanism) could be used. The composite sprockets 5, 5 are each provided with the relative rotation drive mechanism 30, then the widening and reduction of the circumcircle radii of the two composite sprockets 5, 5 are separately carried out. In this case, the transmission mechanism has a map in which the number of teeth $T_p$ and $T_s$ of the composite sprockets 5, 5 as shown in Table 1 and Fig. 10 are previously set, and on the basis of this map, each relative rotation drive mechanism 30 widens or reduces the circumcircle radius of the corresponding composite sprocket 5. That is, the interlock unit can be configured by software that controls each relative rotation drive mechanism 30 according to the map. Here, in this case, there is no need for the sprocket movable radial slot 19a and the movable radial slot 19b to have the stepped shape as shown in Figs. 4 and 11. Each of the sprocket movable radial slot 19a and the movable radial slot 19b could be formed into a simple curved shape.

**Table 1**

| STEP | | $T_p$ | $T_s$ | $L_g$ | $L_r$ | $L_r-L_g$ | $\alpha$ |
|---|---|---|---|---|---|---|---|
| 1 | (Lowest) | 30 | 70 | 648.62 | 648 | -0.62 | 3.3 |
| 2 | | 31 | 69 | 647.78 | 648 | 0.22 | 3.3 |
| 3 | | 32 | 68 | 646.98 | 648 | 1.02 | 3.3 |
| 4 | | 33 | 67 | 646.22 | 648 | 1.78 | 3.3 |
| 5 | | 34 | 66 | 645.51 | 648 | 2.49 | 3.3 |
| 6 | | 35 | 65 | 644.84 | 648 | 3.16 | 3.3 |
| 7 | | 36 | 64 | 644.21 | 648 | 3.79 | 3.3 |
| 8 | | 37 | 64 | 646.92 | 648 | 1.08 | 3.3 |
| 9 | | 38 | 63 | 646.36 | 648 | 1.64 | 3.3 |
| 10 | | 39 | 62 | 645.84 | 648 | 2.16 | 3.3 |
| 11 | | 40 | 61 | 645.37 | 648 | 2.63 | 3.3 |
| 12 | | 41 | 60 | 644.94 | 648 | 3.06 | 3.3 |
| 13 | | 42 | 59 | 644.55 | 648 | 3.45 | 3.3 |
| 14 | | 43 | 59 | 647.37 | 648 | 0.63 | 3.3 |
| 15 | | 44 | 58 | 647.05 | 648 | 0.95 | 3.3 |

(continued)

| STEP | | $T_p$ | $T_s$ | $L_g$ | $L_r$ | $L_r$-$L_g$ | $\alpha$ |
|---|---|---|---|---|---|---|---|
| 16 | | 45 | 57 | 646.77 | 648 | 1.23 | 3.3 |
| 17 | | 46 | 56 | 646.54 | 648 | 1.46 | 3.3 |
| 18 | | 47 | 55 | 646.34 | 648 | 1.66 | 3.3 |
| 19 | | 48 | 54 | 646.19 | 648 | 1.81 | 3.3 |
| 20 | | 49 | 53 | 646.09 | 648 | 1.91 | 3.3 |
| 21 | | 50 | 52 | 646.02 | 648 | 1.98 | 3.3 |
| 22 | (Uniform transmission ratio) | 51 | 51 | 646 | 648 | 2 | 3.3 |
| 23 | | 52 | 50 | 646.02 | 648 | 1.98 | 3.3 |
| 24 | | 53 | 49 | 646.09 | 648 | 1.91 | 3.3 |
| 25 | | 54 | 48 | 646.19 | 648 | 1.81 | 3.3 |
| 26 | | 55 | 47 | 646.34 | 648 | 1.66 | 3.3 |
| 27 | | 56 | 46 | 646.54 | 648 | 1.46 | 3.3 |
| 28 | | 57 | 45 | 646.77 | 648 | 1.23 | 3.3 |
| 29 | | 58 | 44 | 647.05 | 648 | 0.95 | 3.3 |
| 30 | | 59 | 43 | 647.37 | 648 | 0.63 | 3.3 |
| 31 | | 59 | 42 | 644.55 | 648 | 3.45 | 3.3 |
| 32 | | 60 | 41 | 644.94 | 648 | 3.06 | 3.3 |
| 33 | | 61 | 40 | 645.37 | 648 | 2.63 | 3.3 |
| 34 | | 62 | 39 | 645.84 | 648 | 2.16 | 3.3 |
| 35 | | 63 | 38 | 646.36 | 648 | 1.64 | 3.3 |
| 36 | | 64 | 37 | 646.92 | 648 | 1.08 | 3.3 |
| 37 | | 64 | 36 | 644.21 | 648 | 3.79 | 3.3 |
| 38 | | 65 | 35 | 644.84 | 648 | 3.16 | 3.3 |
| 39 | | 66 | 34 | 645.51 | 648 | 2.49 | 3.3 |
| 40 | | 67 | 33 | 646.22 | 648 | 1.78 | 3.3 |
| 41 | | 68 | 32 | 646.98 | 648 | 1.02 | 3.3 |
| 42 | | 69 | 31 | 647.78 | 648 | 0.22 | 3.3 |
| 43 | (Highest) | 70 | 30 | 648.62 | 648 | -0.62 | 3.3 |

**Claims**

1. A transmission mechanism that changes a transmission ratio, comprising:

a set of two composite sprockets each having:

a rotation shaft that inputs or outputs power;
a plurality of pinion sprockets, each of which is supported movably in a radial direction with respect to the rotation shaft; and
a sprocket movement mechanism that moves the plurality of pinion sprockets in the radial direction in synchronization with each other while maintaining equidistance of each of the pinion sprockets from a shaft center of the rotation shaft ;

a chain wound around the set of two composite sprockets , the transmission ratio being changed by changing a circumcircle radius that is a radius of a circle that encircles all of the plurality of pinion sprockets and circumscribes all of the plurality of pinion sprockets; and

an interlock mechanism that can interlock widening of the circumcircle radius of one composite sprocket and reduction of the circumcircle radius of the other composite sprocket during change of the transmission ratio, and the interlock mechanism being configured so that in a case where the transmission ratio is changed toward a uniform transmission ratio at which rotation speeds of the two rotation shafts are the same, if an actual chain length, which is a real length of the chain with respect to a geometrical chain length that is a length of an ideal chain wound around the two composite sprockets without excess and deficiency of a chain length when the widening of the one composite sprocket and the reduction of the other composite sprocket are carried out by a same amount, is greater than a predetermined length, an amount of the reduction of the other composite sprocket is set to be smaller than an amount of the widening of the one composite sprocket, while if the actual chain length is not greater than the predetermined length, the amount of the widening of the one composite sprocket and the amount of the reduction of the other composite sprocket are set to be the same.

2. The transmission mechanism as claimed in claim 1, wherein:

the actual chain length is set to be greater than a maximum possible geometrical chain length.

3. The transmission mechanism as claimed in claim 1 or 2, wherein:

the actual chain length is set to a length including a stretch of the chain.

4. The transmission mechanism as claimed in any one of the preceding claims 1 to 3, wherein:

the widening or the reduction of the composite sprocket is carried out so that the number of teeth of an apparent composite sprocket formed by the plurality of pinion sprockets is shifted from a current integer to other integers in sequence.

5. The transmission mechanism as claimed in claim 4, wherein:

in the case where the transmission ratio is changed toward the uniform transmission ratio, if the geometrical chain length is the predetermined length or more greater than the actual chain length, the interlock mechanism stops the reduction of the other composite sprocket.

6. The transmission mechanism as claimed in claims 4 or 5, further comprising:

a map in which a combination between the number of teeth of the one composite sprocket and the number of teeth of the other composite sprocket is previously set so as to stop the reduction of the other composite sprocket when the geometrical chain length is the predetermined length or more greater than the actual chain length in the case where the transmission ratio is changed toward the uniform transmission ratio, and wherein on the basis of the map, the interlock mechanism widens the circumcircle radius of the one composite sprocket and reduces the circumcircle radius of the other composite sprocket.

7. The transmission mechanism as claimed in any one of the preceding claims 1 to 5, wherein:

the interlock mechanism has:

a stationary disk having sprocket stationary radial slots in which supporting shafts of the plurality of pinion sprockets are inserted and rotating integrally with the rotation shaft; and
a movable disk having sprocket movable radial slots, arranged concentrically with the stationary disk and rotating relatively to the stationary disk, wherein the supporting shafts of the plurality of pinion sprockets are positioned in intersection positions where the sprocket movable radial slots and the sprocket stationary radial slots intersect with each other, and

the sprocket stationary radial slots and the sprocket movable radial slots are formed into respective shapes by which in the case where the transmission ratio is changed toward the uniform transmission ratio, if the actual chain length with respect to the geometrical chain length is equal to or greater than the predetermined length, the amount of the reduction of the other composite sprocket is set to be smaller than the amount of the widening of the one composite sprocket, while if the actual chain length with respect to the geometrical chain length is not equal to or greater than the predetermined length, the amount of the widening of the one composite sprocket and the amount of the reduction of the other composite sprocket are set to be the same.

# FIG. 1

EP 3 150 884 A1

# FIG. 2

EP 3 150 884 A1

FIG. 3

11c

12

10

29a
(29)

23a
(23)

1

22a
(22)

C₁

21a
(21)

11b

θ_S

11a

FIG. 4

19b

19

23a
(23)

1

22a
(22)

C₁

19a

191

21a
(21)

F

θ_C

FIG. 5A

FIG. 5B

FIG. 5C

FIG. 6

EP 3 150 884 A1

FIG. 7

FIG. 8

# FIG. 9

# FIG. 10

# FIG. 11

# FIG. 12

**INTERNATIONAL SEARCH REPORT**

| International application No. |
| --- |
| PCT/JP2015/055519 |

**A.   CLASSIFICATION OF SUBJECT MATTER**
*F16H9/24(2006.01)i*

According to International Patent Classification (IPC) or to both national classification and IPC

**B.   FIELDS SEARCHED**

Minimum documentation searched (classification system followed by classification symbols)
F16H9/10, F16H9/24

Documentation searched other than minimum documentation to the extent that such documents are included in the fields searched
Jitsuyo Shinan Koho        1922-1996    Jitsuyo Shinan Toroku Koho    1996-2015
Kokai Jitsuyo Shinan Koho   1971-2015    Toroku Jitsuyo Shinan Koho    1994-2015

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2005-351466 A  (Fu-Shen Jen),<br>22 December 2005 (22.12.2005),<br>entire text; fig. 1 to 22<br>(Family: none) | 1-7 |
| A | JP 50-014968 A  (Ryoji KAGEYAMA),<br>17 February 1975 (17.02.1975),<br>entire text; fig. 1 to 8<br>(Family: none) | 1-7 |
| A | JP 2001-041300 A  (Kenji MIMURA),<br>13 February 2001 (13.02.2001),<br>paragraphs [0027], [0031]; fig. 13<br>& US 2002/0042314 A1    & EP 1072818 A1 | 1-7 |

☒   Further documents are listed in the continuation of Box C.        ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>   21 May 2015 (21.05.15) | Date of mailing of the international search report<br>   02 June 2015 (02.06.15) |
| --- | --- |
| Name and mailing address of the ISA/<br>   Japan Patent Office<br>   3-4-3,Kasumigaseki,Chiyoda-ku,<br>   Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2015/055519

C (Continuation).   DOCUMENTS CONSIDERED TO BE RELEVANT

| Category* | Citation of document, with indication, where appropriate, of the relevant passages | Relevant to claim No. |
|---|---|---|
| A | JP 01-503478 A  (Kumm Industries, Inc.),<br>22 November 1989 (22.11.1989),<br>entire text; fig. 1 to 6<br>& US 4768996 A          & US 4810234 A<br>& GB 2212233 A          & WO 1988/009455 A1<br>& WO 1989/005936 A1      & CN 88103055 A | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7713154 B
- JP 2002250420 A